# EUROPEAN PATENT SPECIFICATION

(11) **EP 4 059 710 B1**
(45) Date of publication and mention of the grant of the patent: **08.10.2025**
(21) Application number: 20888114.4
(22) Date of filing: 13.11.2020
(51) Int. Cl.: B32B 27/18, B32B 27/38, C08G 59/22, C09D 163/00, C08L 63/00, G02B 1/18, C08K 3/00, C09D 7/61, C09D 7/63, C09D 5/02

(54) **LAMINATE BODY, PRODUCTION METHOD FOR LAMINATE BODY, COMPOSITION FOR FORMING ANTIFOGGING FILM, ANTIFOGGING FILM, AND COMPOSITION SET FOR FORMING ANTIFOGGING FILM**
LAMINATKÖRPER, HERSTELLUNGSVERFAHREN FÜR EINEN LAMINATKÖRPER, ZUSAMMENSETZUNG ZUR HERSTELLUNG EINES ANTIBESCHLAGFILMS, ANTIBESCHLAGFILM UND ZUSAMMENSETZUNG ZUR BILDUNG EINES ANTIBESCHLAGFILMS
STRATIFIÉ AINSI QUE PROCÉDÉ DE FABRICATION DE CELUI-CI, COMPOSITION POUR FORMATION DE FILM DE DÉSEMBUAGE, FILM DE DÉSEMBUAGE, ET ENSEMBLE DE COMPOSITION POUR FORMATION DE FILM DE DÉSEMBUAGE

(30) Priority: 15.11.2019 JP 2019207311
(43) Date of publication of application: 21.09.2022
(73) Proprietor: Mitsui Chemicals, Inc., Tokyo 104-0028 (JP)
(72) Inventor: WATANABE, Makoto, Omuta-shi, Fukuoka 836-8610 (JP)
(74) Representative: Mewburn Ellis LLP
(86) International application number: PCT/JP2020/042406
(87) International publication number: WO 2021/095839

(56) References cited:
- EP-A1- 3 505 345
- WO-A1-2013/089165
- WO-A1-2015/008672
- WO-A1-2015/152049
- JP-A- 2004 136 525
- JP-A- 2006 063 160
- JP-A- 2013 244 691
- JP-A- 2014 114 430
- JP-A- 2018 163 340
- JP-A- H1 025 468
- KR-A- 20190 103 466

## Description

### Technical Field

The present disclosure relates to a laminated body, a method of manufacturing a laminated body, an antifogging film forming composition, an antifogging film, and a set of antifogging film forming compositions.

### Background Art

In recent years, there has been an increasing demand for improvement against fogging of substrates formed of an organic material such as plastic and an inorganic material such as glass.

As a method for solving the problem of fogging, for example, Patent Document 1 discloses an antifogging article including a base substrate and an antifogging film on at least a part of a surface of the base substrate, in which the antifogging film includes an underlying resin layer and a water-absorbing resin layer sequentially laminated on the surface of the base substrate, the water-absorbing resin layer is a water-absorbing resin layer mainly composed of a first cured epoxy resin obtained by reacting a composition for forming a water-absorbing resin layer which contains a specific polyepoxide component and a first curing agent, and the underlying resin layer is an underlying resin layer having water absorbency lower than that of the water-absorbing resin layer. Patent Document 2 describes antireflective laminates. Patent Documents 3 and 4 describe compositions for use in optical materials. Patent Document 5 describes epoxy lining material compositions. Patent Document 6 describes photosensitive compositions and a cured film form of the photosensitive composition. Patent Document 7 describes antifogging agent compositions.
Patent Document 1: WO 2012/077686
Patent Document 2: EP 3505345
Patent Document 3: KR 2019/0103466
Patent Document 4: JP 2006/063 160
Patent Document 5: JP 2004/136525
Patent Document 6: JP 2018/163340
Patent Document 7: JP H1025468

### SUMMARY OF INVENTION

### Technical Problem

In a laminated body intended for antifogging using an epoxy resin, inorganic particles may be blended into the laminated body for the purpose of improving mechanical strength of the laminated body. In this case, the mechanical strength can be improved by increasing a content mass of the inorganic particles in the laminated body, but the antifogging properties of the laminated body tend to be deteriorated.

When the content mass of the inorganic particles in the laminate is decreased, the deterioration in antifogging properties of the laminated body can be suppressed, but the mechanical strength tends to be insufficient.

A laminated body intended for antifogging is required to achieve both a favorable mechanical strength and high antifogging properties while containing inorganic particles.

In the antifogging article of Patent Document 1, there is room for improvement in configuration of each layer, components contained in each layer, from the viewpoint of achieving both a favorable mechanical strength and high antifogging properties.

An object of an embodiment of the disclosure is to provide a laminated body having a favorable mechanical strength and excellent antifogging properties, a method of manufacturing the laminated body, an antifogging film forming composition, an antifogging film obtained by curing the composition, and a set of antifogging film forming compositions.

### Solution to Problem

Specific means for solving the problem include the following aspects.

In a first aspect, the invention provides a laminated body including: a substrate; a storage layer (A); and a buffer layer (B) disposed in this order, wherein: the storage layer (A) is formed of a cured product of a composition (A-1) containing: a polyfunctional monomer (a1) containing two or more epoxy groups; inorganic particles (a2); and a surfactant (a3), the buffer layer (B) is formed of a cured product of a composition (B-1) containing: a polyfunctional monomer (b1) containing two or more epoxy groups; and inorganic particles (b2), a content mass of the inorganic particles (a2) with respect to a total mass of the storage layer (A) is 30% by mass or more, and a content mass of the inorganic particles (b2) with respect to a total mass of the buffer layer (B) is 30% by mass or more, the content mass of the inorganic particles (b2) with respect to the total mass of the buffer layer (B) is larger than the content mass of the inorganic particles (a2) with respect to the total mass of the storage layer (A), the polyfunctional monomer (a1) contains a polyfunctional monomer (a1-1) having a molecular weight per epoxy group in one molecule of 200 g/mol or more, and a polyfunctional monomer (a1-2) having a molecular weight per epoxy group in one molecule of less than 200 g/mol, and the polyfunctional monomer (b1) contains a polyfunctional monomer (b 1-1) having a molecular weight per epoxy group in one molecule of 200 g/mol or more, and a polyfunctional monomer (b1-2) having a molecular weight per epoxy group in one molecule of less than 200 g/mol, each of the polyfunctional monomer (a1-1) and the polyfunctional monomer (b1-1) independently has an oxyalkylene structure,
each of the polyfunctional monomer (a1-2) and the polyfunctional monomer (b1-2) independently contains a compound represented by the following Formula (1): 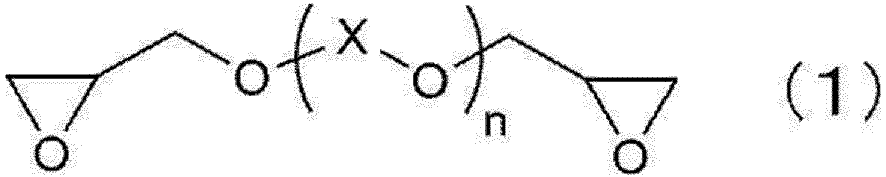
   wherein, in Formula (1), X is an alkylene group having from 2 to 6 carbon atoms, and n is an integer from 1 to 5, and
   wherein, in Formula (1), when n is an integer from 2 to 5, a plurality of Xs may be the same or different,
a content mass of the surfactant (a3) with respect to the total mass of the storage layer (A) is from 1.0% by mass to 5.0% by mass,
the buffer layer (B) contains no surfactant, or a content mass of a surfactant (b3) with respect to the total mass of the buffer layer (B) is from more than 0% by mass to less than 1.0% by mass, and
each of the surfactant (a3) and the surfactant (b3) independently has a polyoxyalkylene structure.

In some embodiments, each of the polyfunctional monomer (a1-1) and the polyfunctional monomer (b1-1) independently has a molecular weight of 500 g/mol or less per epoxy group in one molecule.

In some embodiments, the content mass of the inorganic particles (a2) with respect to the total mass of the storage layer (A) is from 30% by mass to 60% by mass, and the content mass of the inorganic particles (b2) with respect to the total mass of the buffer layer (B) is from 40% by mass to 70% by mass.

In some embodiments, the composition (A-1) further contains a polyfunctional monomer (a4) containing an oxetane ring, and the composition (B-1) further contains a polyfunctional monomer (b4) containing an oxetane ring.

In some embodiments, each of the composition (A-1) and the composition (B-1) independently contains at least one of a thermal polymerization initiator or a photopolymerization initiator as a polymerization initiator.

In some embodiments, each of the composition (A-1) and the composition (B-1) independently contains silica particles and contains an aluminum chelator and a thermal acid generator as the thermal polymerization initiator.

In some embodiments, a ratio of a thickness of the storage layer (A) to a thickness of the buffer layer (B) is in a range of from 1.3 to 15.

In some embodiments, the substrate is a plastic lens.

In some embodiments, the substrate contains polythiourethane, polycarbonate, or polyallyl carbonate.

In some embodiments, a total content mass of the polyfunctional monomer (a1), the inorganic particles (a2), the surfactant (a3), and a polymerization initiator in the composition (A-1) is 95% by mass or more with respect to a total mass of the composition (A-1), and a total content mass of the polyfunctional monomer (b1), the inorganic particles (b2), a surfactant (b3), and a polymerization initiator in the composition (B-1) is 95% by mass or more with respect to a total mass of the composition (B-1).

In a second aspect, the invention provides a method of manufacturing a laminated body according to the first aspect, including: a step (S1) of providing an applied material layer (A2) of a composition (A-1a) containing a polyfunctional monomer (a1) containing two or more epoxy groups, inorganic particles (a2), a surfactant (a3), and a solvent (a4) on at least one surface of a substrate; a step (S2) of removing the solvent (a4) from the applied material layer (A2); a step (S3) of curing the applied material layer (A2) to obtain a storage layer (A); a step (S4) of providing an applied material layer (B2) of a composition (B-1a) containing a polyfunctional monomer (b1) containing two or more epoxy groups, inorganic particles (b2), an optional surfactant (b3), and a solvent (b4) on the storage layer (A) after the step (S3); a step (S5) of removing the solvent (b4) from the applied material layer (B2); and a step (S6) of curing the applied material layer (B2) to obtain a buffer layer (B).

In some embodiments of the method of manufacturing a laminated body, a total dry mass of the composition (A-1) per 100 parts by mass of the composition (A-1) is from 46 parts by mass to less than 100 parts by mass.

In a third aspect, the invention provides use of a laminated body according the first aspect as an antifogging film.

### Advantageous Effects of Invention

An embodiment of the disclosure can provide a laminated body having a favorable mechanical strength and excellent antifogging properties, a method of manufacturing the laminated body, an antifogging film forming composition, an antifogging film obtained by curing the composition, and a set of antifogging film forming compositions.

### DESCRIPTION OF EMBODIMENTS

In the disclosure, a numerical range indicated using "to" means a range including numerical values described before and after "to" as a minimum value and a maximum value, respectively.

In the numerical ranges described in stages in the disclosure, the upper limit value or the lower limit value described in a numerical range may be replaced with the upper limit value or the lower limit value of any other numerical range described in stages. In addition, in numerical ranges described in the disclosure, the upper limit values or the lower limit values indicated as numerical ranges may be replaced with values shown in Examples.

In the disclosure, a combination of two or more preferred aspects is a more preferred aspect.

In the present disclosure, if there are a plurality of substances corresponding to each component, the amount of each component means a total amount of the plurality of substances unless otherwise specified.

In the disclosure, the term "step" includes not only an independent step but also a step that cannot be clearly distinguished from other steps as long as the purpose of step is achieved.

### <<Laminated body>>

The laminated body of the disclosure includes: a substrate; a storage layer (A); and a buffer layer (B) disposed in this order.

The storage layer (A) is formed of a cured product of a composition (A-1) containing: a polyfunctional monomer (a1) containing two or more epoxy groups; inorganic particles (a2); and a surfactant (a3).

The buffer layer (B) is formed of a cured product of a composition (B-1) containing: a polyfunctional monomer (b1) containing two or more epoxy groups; and inorganic particles (b2).

A content mass of the inorganic particles (a2) with respect to a total mass of the storage layer (A) is 30% by mass or more.

A content mass of the inorganic particles (b2) with respect to a total mass of the buffer layer (B) is 30% by mass or more.

The polyfunctional monomer (a1) contains a polyfunctional monomer (a1-1) having a molecular weight per epoxy group in one molecule (hereinafter referred to also as "epoxy equivalent") of 200 g/mol or more.

The polyfunctional monomer (b1) contains a polyfunctional monomer (b1-1) having a molecular weight per epoxy group in one molecule of 200 g/mol or more.

As described above, in a laminated body using an epoxy resin for the purpose of antifogging, the mechanical strength can be improved by increasing the content mass of the inorganic particles in the laminated body, but the antifogging properties of the laminated body tend to decrease.

When the content mass of the inorganic particles in the laminate is decreased, the deterioration in antifogging properties of the laminated body can be suppressed, but the mechanical strength tends to be insufficient.

As a result of intensive studies by the present inventor, the following findings have been obtained.

First, in order for the laminated body to obtain the antifogging properties, it is considered that the surfactant contained in the laminated body improves the hydrophilicity on a surface of the laminated body, thereby making it possible to improve the antifogging properties.

When the content mass of the inorganic particles in the layer is increased, the amount of the water-absorbing monomer contained in the laminated body is relatively reduced. As a result, water adsorbed to the surface cannot be sufficiently absorbed into the film, leading to difficulty in obtaining sufficient antifogging properties.

As a result, it is considered that the antifogging properties of the laminated body are deteriorated when the content mass of the inorganic particles in the layer is increased.

On the other hand, when the content of the inorganic particles is reduced, it is difficult to obtain mechanical strength due to the inorganic particles themselves, and, further, to obtain sufficient crosslinkability in a network of a crosslinked structure by the monomer and the inorganic particles, whereby it is more difficult to obtain mechanical strength.

When a crosslinking density of the crosslinked structure is too high, the surfactant present in the laminated body cannot appropriately move from the inside of the laminated body to the surface of the laminated body.

Due to the above configuration, the laminated body of the disclosure can include a substrate, a storage layer (A), and a buffer layer (B) disposed in this order, and inorganic particles having a content mass of a specific value or more and a polyfunctional monomer having an epoxy equivalent of a specific value or more can be included in each of the storage layer (A) and the buffer layer (B).

Thus, the network of the crosslinked structure formed by the inorganic particles and the polyfunctional monomer can be formed, and, due to the network of the crosslinked structure, the surfactant can be moved to a surface of the buffer layer (B) while the surfactant is appropriately retained in the storage layer (A).

Hence, the laminated body of the disclosure has a favorable mechanical strength and excellent antifogging properties.

In the disclosure, the "total dry mass" for a composition refers to a total mass of components of the composition except the solvent component, unless otherwise specified.

Also, the "total dry mass" for the composition (A-1) corresponds to the total mass of the storage layer (A) and the "total dry mass" for the composition (B-1) corresponds to the total mass of the buffer layer (B).

Hereinafter, each layer of the laminated body of the present disclosure will be described.

### <Storage layer (A)>

In the laminated body of the disclosure, the storage layer (A) is formed of a cured product of a composition (A-1) containing a polyfunctional monomer (a1) containing two or more epoxy groups, inorganic particles (a2), and a surfactant (a3).

The storage layer (A) stores the surfactant (a3) therein, and serves to continuously supply the surfactant (a3) to the surface of the laminated body of the disclosure through the buffer layer (B) which will be described below.

Thus, the laminated body of the disclosure can exhibit high antifogging properties.

### <Polyfunctional monomer (a1)>

The composition (A-1) in the disclosure contains a polyfunctional monomer (a1) containing two or more epoxy groups.

In the disclosure, the polyfunctional monomers (a1) each containing two or more epoxy groups are bonded to each other through curing by a crosslinking reaction of the composition (A-1). A network structure formed by the above bonds can give a basic skeleton to the storage layer (A), and can give the storage layer (A) a space for storing the surfactant (a3).

That is, the polyfunctional monomer (a1) is converted into a corresponding polymer through curing of the composition (A-1), and constitutes a polymer component in the storage layer (A).

The polyfunctional monomer (a1) used in the disclosure contains two or more epoxy groups and a linker moiety that fixes the two or more epoxy groups in one molecule.

### <Epoxy equivalent>

The polyfunctional monomer (a1) in the disclosure contains a polyfunctional monomer (a1-1) having a molecular weight per epoxy group in one molecule (hereinafter referred to also as "epoxy equivalent") of 200 g/mol or more.

When the polyfunctional monomer (a1) contains the polyfunctional monomer (a1-1) having an epoxy equivalent of 200 g/mol or more, it is possible to reduce a number of reaction points in the crosslinking reaction while ensuring the molecular weight required for layer formation. This enables the storage layer to easily retain moisture, that is, to be improved in water absorbing properties, and thus the antifogging properties of the laminated body can be improved.

From the same viewpoint as described above, the epoxy equivalent of the polyfunctional monomer (a1-1) is preferably 300 g/mol or more, and more preferably 350 g/mol or more.

The polyfunctional monomer (a1-1) preferably has an epoxy equivalent of 500 g/mol or less. When the epoxy equivalent of the polyfunctional monomer (a1-1) is 500 g/mol or less, the crosslinking reaction can be favorably promoted, so that a laminated body having favorable scratch resistance can be obtained.

From the same viewpoint as described above, the epoxy equivalent of the polyfunctional monomer (a1-1) is more preferably 450 g/mol or less.

The polyfunctional monomer (a1-1) has an oxyalkylene structure from the viewpoint of improving water absorbing properties to obtain favorable antifogging properties.

The oxyalkylene structure may have a hydrophilic group as a substituent.

When the oxyalkylene structure has a hydrophilic group, the water absorbing properties of the laminated body can be improved.

Examples of the hydrophilic group include a hydroxyl group, a carboxy group, and a sulfonic acid group.

Among these groups, the hydrophilic group is preferably a hydroxyl group, and more preferably a diol.

Examples of the polyfunctional monomer (a1-1) include diols having a polyoxyethylene structure.

The oxyalkylene structure preferably has an ether bond.

When the oxyalkylene structure has an ether bond, the water absorbing properties of the laminated body can be improved, so that better antifogging properties can be obtained.

The polyfunctional monomer (a1-1) may further contain an aromatic ring, or may be an alicyclic compound.

Examples of the polyfunctional monomer (a1-1) containing an aromatic ring include an ethylene oxide adduct of bisphenol.

The linker moiety of the polyfunctional monomer (a1-1) preferably has a chain structure from the viewpoint of improving the antifogging properties.

The molecular weight of the polyfunctional monomer (a1-1) is preferably from 300 to 2000, and more preferably from 300 to 1000.

As the polyfunctional monomer (a1-1), a commercially available product may be used, and examples thereof include DENACOL EX-841 (manufactured by Nagase ChemteX Corporation).

The polyfunctional monomer (a1) contains, in addition to the polyfunctional monomer (a1-1), a polyfunctional monomer (a1-2) having an epoxy equivalent of less than 200 g/mol.

The polyfunctional monomer (a1) contains the polyfunctional monomer (a1-2) having an epoxy equivalent of less than 200 g/mol, and it is possible to increase the number of reaction points in the crosslinking reaction and thus to improve a degree of crosslinking. As a result, the scratch resistance of the laminated body can be improved.

The polyfunctional monomer (a1-2) contains a compound represented by the following Formula (1).

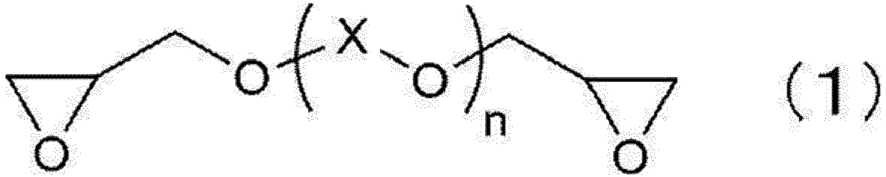

In Formula (1), X is an alkylene group having from 2 to 6 carbon atoms, and n is an integer from 1 to 5.

In Formula (1), when n is an integer from 2 to 5, a plurality of Xs may be the same or different.

In Formula (1), the alkylene group having from 2 to 6 carbon atoms as X is preferably an alkylene group having 2 or 3 carbon atoms.

The alkylene group having from 2 to 6 carbon atoms may have or need not have a substituent. Examples of the substituent include a hydrophilic group (a hydroxyl group, a carboxyl groups, etc.), a glycidyl ether group, and an alkyl group having a hydrophilic group or a glycidyl ether group.

The molecular weight of the polyfunctional monomer (a1-2) is preferably from 100 to 2000, and more preferably from 150 to 1500.

The polyfunctional monomer (a1) used in the disclosure may be used singly or in combination of two or more kinds thereof.

A content mass of the polyfunctional monomer (a1) forming the storage layer (A) is preferably from 30% by mass to 70% by mass, and more preferably from 45% by mass to 60% by mass with respect to a total mass of the storage layer (A).
The content mass of the polyfunctional monomer (a1) with respect to the total mass of the storage layer (A) as described herein means a total content mass of all the monomers contained as the polyfunctional monomer (a1).

A content mass of the polyfunctional monomer (a1-1) with respect to a total content mass of the polyfunctional monomer (a1-1) and the polyfunctional monomer (a1-2) is preferably from 5% by mass to 50% by mass, and preferably from 10% by mass to 40% by mass.

The content mass of the polyfunctional monomer (a1) with respect to a content mass of all the monomers forming the storage layer (A) is preferably 70% by mass or more, and more preferably 75% by mass or more.

The composition (A-1) preferably further contains a polyfunctional monomer (a4) containing an oxetane ring.

This can further improve the degree of crosslinking between the polyfunctional monomers, so that the scratch resistance of the laminated body can be further improved.

The polyfunctional monomer (a4) preferably contains two oxetane rings. The polyfunctional monomer (a4) preferably contains an ether bond (except an ether bond of the oxetane ring).

Examples of the polyfunctional monomer (a4) include ARON OXETANE OXT-221 (TOAGOSEI CO., LTD.).

A content mass of the polyfunctional monomer (a4) containing an oxetane ring is preferably 2% by mass or more, and more preferably 4% by mass or more with respect to the total mass of the storage layer (A) from the viewpoint of further improving the scratch resistance of the laminated body.

The content mass of the polyfunctional monomer (a4) containing an oxetane ring is preferably 10% by mass or less, and more preferably 8% by mass or less with respect to the total mass of the storage layer (A) from the viewpoint of favorably maintaining the antifogging properties of the laminated body.

A total content mass of the polyfunctional monomer (a1) and the polyfunctional monomer (a4) with respect to the content mass of all the monomers forming the storage layer (A) is preferably 90% by mass or more, and more preferably 95% by mass or more.

### <Inorganic particles (a2)>

The composition (A-1) in the disclosure contains inorganic particles (a2).

In the disclosure, the inorganic particles (a2) are present inside the storage layer (A) so as to be incorporated into the network structure formed by bonding the polyfunctional monomers (a1) to each other. This makes it possible to improve hardness and strength of the storage layer (A).

The inorganic particles (a2) used in the disclosure may be inorganic particles (a2-0) (hereinafter, simply referred to also as "inorganic particles (a2-0)") that are not modified with a functional group including an epoxy group, or may be inorganic particles (a2-1) (hereinafter, simply referred to also as "inorganic particles (a2-1)") that are modified with a functional group including an epoxy group.

In one aspect of the disclosure, the inorganic particles (a2-0) are unmodified inorganic particles. That is, the inorganic particles (a2-0) are particles substantially consisting only of an inorganic substance.

The "particles substantially consisting only of an inorganic substance" does not mean that a content mass of an organic substance in the inorganic particles (a2-0) is strictly 0. That is, the inorganic particles (a2-0) may contain an organic substance that is not reactive with other components in a trace amount to such an extent that physical properties inherent in the inorganic substance as a component of the inorganic particles (a2-0) are not affected.

For example, the inorganic particles (a2-0) may contain a trace amount of organic substance that can be unavoidably mixed due to a manufacturing step, a trace amount of organic substance derived from the atmosphere that can be unavoidably non-specifically adsorbed to the surfaces thereof by being left standing in the atmosphere.

Examples of the inorganic substance as a component of the inorganic particles (a2-0) include metal oxides such as silica, zirconia, alumina, tin oxide, antimony oxide, and titania, and nanodiamond particles.

Among these substances, silica and zirconia are preferable as the inorganic substance as a component of the inorganic particles (a2-0) from the viewpoint of dispersibility in a resin obtained from the polyfunctional monomer (a1), hardness of the laminated body, and light resistance.

A particle size of the inorganic particles (a2-0) is preferably from 5 nm to 50 nm.

When the particle size of the inorganic particles (a2-0) is 5 nm or more, the hardness of the laminated body can be improved. In addition, the dispersibility of the particles in the composition (A-1) can be improved.

On the other hand, when the particle size of the inorganic particles (a2-0) is 50 nm or less, transparency of the composition (A-1) when formed as a cured product can be improved.

The particle size of the inorganic particles (a2-0) is more preferably from 10 nm to 30 nm.

The particle size of the inorganic particles (a2-0) is measured by performing a dynamic scattering method with laser light.

The inorganic particles (a2-0) may be used singly or in combination of two or more kinds thereof.

The inorganic particles (a2-0) are commercially available, and examples thereof include PGM-ST manufactured by Nissan Chemical Corporation.

In one aspect of the disclosure, the inorganic particles (a2) may be inorganic particles (a2-1) modified with a functional group including an epoxy group.

The inorganic particles (a2-1) are particles including the inorganic particles (a2-0) as basic particles and having a functional group including an epoxy group on surfaces of the basic particles.

**In** the above aspect, during curing of the composition (A-1), the epoxy group included in the inorganic particles (a2-1) forms a covalent bond with the epoxy group included in the polyfunctional monomer (a1). Therefore, in the storage layer (A) obtained from the composition (A-1), the inorganic particles (a2-1) are integrated with the network structure formed by bonding the polyfunctional monomers (a1) to each other through a covalent bond.

Suitable examples of the inorganic particles (a2-1) include silica particles modified with a functional group including an epoxy group and zirconia particles modified with a functional group including an epoxy group.

The "functional group including an epoxy group" included in the inorganic particles (a2-1) has an epoxy group at a terminal thereof, and further has a linking group for linking the epoxy group and the basic particles.

The inorganic particles (a2-1) may be used singly or in combination of two or more kinds thereof.

In the disclosure, a content mass of the inorganic particles (a2) with respect to the total mass of the storage layer (A) is 30% by mass or more.

This can improve the scratch resistance of the obtained laminated body.

From the same viewpoint as described above, the content mass of the inorganic particles (a2) with respect to the total mass of the storage layer (A) is preferably 40% by mass or more, and more preferably 50% by mass or more.

An upper limit of the content mass of the inorganic particles (a2) with respect to the total mass of the storage layer (A) is not particularly limited, and the content mass of the inorganic particles (a2) with respect to the total mass of the storage layer (A) may be, for example, 70% by mass or less, or 60% by mass or less.

As for proportions of the inorganic particles (a2-0) and the inorganic particles (a2-1) when the inorganic particles (a2) contains both the inorganic particles (a2-0) and the inorganic particles (a2-1), the amount of the inorganic particles (a2-0) is preferably from more than 0% by mass to 30% by mass, and the amount of the inorganic particles (a2-1) is preferably from 70% by mass to less than 100% by mass, when a total mass of the inorganic particles (a2-0) and the inorganic particles (a2-1) is 100% by mass.

In the disclosure, a proportion of the inorganic particles (a2) to the polyfunctional monomer (a1) forming the storage layer (A) is preferably in a range of from 0.6/1 to 1/1 as a ratio of the content mass of the inorganic particles (a2) to the content mass of the polyfunctional monomer (a1) in the composition (A-1).

The inorganic particles (a2-1) are commercially available, and examples thereof include MEK-EC-2430Z manufactured by Nissan Chemical Corporation.

### <Surfactant (a3)>

The composition (A-1) in the disclosure contains a surfactant (a3).

In the disclosure, the surfactant (a3) is stored inside the storage layer (A), and exudes to the surface of the laminated body of the disclosure through the buffer layer (B) which will be described later, thereby playing a role of imparting antifogging properties to the laminated body of the disclosure.

The surfactant (a3) has a polyoxyalkylene structure.

In an aspect of the disclosure, the surfactant (a3) may include a hydrocarbon group and a polyoxyalkylene structure.

Examples of the hydrocarbon group include an alkyl group and an alkenyl group.

In a preferred aspect of the disclosure, the surfactant (a3) further has an anionic hydrophilic group.

Examples of the surfactant (a3) having an anionic hydrophilic group include a polyoxyalkylene alkyl ether sulfate, a polyoxyalkylene alkenyl ether sulfate, and a mixture thereof.

The surfactant (a3) used in the disclosure may be a nonionic surfactant having a polyoxyalkylene structure.

Examples of the nonionic surfactant having a polyoxyalkylene structure include polyoxyalkylene alkyl ethers such as polyoxyalkylene monoalkyl ethers, polyoxyalkylene alkenyl ethers such as polyoxyalkylene monoalkenyl ethers, and mixtures thereof.

In an exemplary aspect of the present disclosure, the polyoxyalkylene alkyl ether may be a polyoxyethylene alkyl ether. Specific examples of the polyoxyethylene alkyl ether include polyoxyethylene isodecyl ether and polyoxyethylene lauryl ether.

The surfactant (a3) used in the disclosure may be used singly or in combination of two or more kinds thereof.

A content mass of the surfactant (a3) with respect to the total mass of the storage layer (A) is from 1.0% by mass to 5.0% by mass, and more preferably from 1.5% by mass to 3.0% by mass.

As the surfactant (a3), a commercially available product may be used, and examples thereof include NOIGEN LP-100 (polyoxyalkylene lauryl ether manufactured by DKS Co., Ltd.).

### <Any other surfactant>

In the disclosure, the composition (A-1) may further contain any other surfactant that does not correspond to the surfactant (a3) (hereinafter, "any other surfactant"), in addition to the surfactant (a3), according to the configuration, and intended use of the laminated body of the disclosure.

The "any other surfactant" is not particularly limited as long as it does not correspond to the surfactant (a3), and may be a conventionally known surfactant.

A content mass of the "any other surfactant" is preferably from more than 0% by mass to 0.05% by mass, and more preferably from 0.25% by mass to 0.35% by mass with respect to the total mass of the storage layer (A).

The "any other surfactant" that can be contained in the composition (A-1) may be used singly or in combination of two or more kinds thereof.

### <Polymerization initiator>

The composition (A-1) preferably contains a polymerization initiator.

As the polymerization initiator, at least one of a thermal polymerization initiator and a photopolymerization initiator is preferable, and a thermal polymerization initiator is preferable.

As the thermal polymerization initiator, a known thermal polymerization initiator can be used.

Examples of the known thermal polymerization initiator include ketone peroxides, diacyl peroxides, dialkyl peroxides, peroxyketals, alkyl peresters, percarbonates, aluminum chelators, and thermal acid generators.

Among these materials, an aluminum chelator and a thermal acid generator are preferable as the thermal polymerization initiator from the viewpoint of improving the scratch resistance.

Examples of the aluminum chelator include Alumichelate A(W) (manufactured by Kawaken Fine Chemicals Co., Ltd.).

Examples of the thermal acid generator include San Aid SI-60L (manufactured by Sanshin Chemical Industry Co., Ltd.).

Examples of the photopolymerization initiator include a photoradical polymerization initiator, a photocationic polymerization initiator, and a photoanionic polymerization initiator, and, among the photopolymerization initiators, a photocationic polymerization initiator is preferable. In particular, when the storage layer (A) is obtained by a spin coating method, a photocationic polymerization initiator can be preferably used as the photopolymerization initiator.

Examples of the photocationic polymerization initiator include San-Apro CP-210S (Sanyo Chemical Industries, Ltd.).

Amounts of the photopolymerization initiator, a photopolymerization accelerator, and the thermal polymerization initiator used are preferably from 1% by mass to 5% by mass, and more preferably from 2% by mass to 3% by mass, with respect to the total mass of the storage layer (A).

When the storage layer (A) is formed by application, the thickness of the storage layer (A) can be adjusted by adjusting the amount of the solvent (a4) contained in the composition (A-1).

A total dry mass of the composition (A-1) per 100 parts by mass of the composition (A-1) is preferably 46 parts by mass or more.

This leads to a further increase in thickness of the obtained storage layer (A), so that the deterioration in antifogging properties after water washing is further suppressed.

From the same viewpoint as described above, the total dry mass of the composition (A-1) per 100 parts by mass of the composition (A-1) is more preferably 55 parts by mass or more.

On the other hand, the total dry mass of the composition (A-1) per 100 parts by mass of the composition (A-1) is less than 100 parts by mass, and is preferably 65 parts by mass or less from the viewpoint of further improving the fluidity required for application.

### <Solvent>

The composition (A-1) may contain a solvent.

The composition (A-1) may contain the solvent singly or in combination of two or more kinds thereof.

The solvent is not particularly limited, but is preferably a solvent in which the components of the composition (A-1) that is cured to form the storage layer (A) are not separated.

Examples of the solvent include alcohols such as methanol, ethanol, n-propanol, isopropanol, n-butanol, isobutanol, t-butanol, n-pentanol, isopentanol, n-hexanol, n-octanol, 2-ethyl-hexanol, 2-methoxyethanol, 2-ethoxyethanol, 2-n-propoxyethanol, 2-isopropoxyethanol, 2-butoxyethanol, 1-methoxy-2 propanol (also referred to as propylene glycol monomethyl ether), 1-ethoxy-2-propanol (also referred to as propylene glycol monoethyl ether), 1-n-propoxy-2-propanol, 1-isopropoxy-2-propanol, and cyclohexanol, ethers such as diethyl ether, tetrahydrofuran, and dioxane, nitriles such as acetonitrile, esters such as ethyl acetate, n-propyl acetate, and n-butyl acetate, ketones such as acetone, methyl ethyl ketone, and methyl isobutyl ketone, amides such as N,N-dimethylformamide and N,N-dimethylacetamide, and water.

The solvent is preferably an alcohol, a ketone, or a mixed solvent of an alcohol and a ketone.

It is preferable that a total content mass of the polyfunctional monomer (a1), the inorganic particles (a2), the surfactant (a3), and the polymerization initiator in the composition (A-1) is 95% by mass or more with respect to the total mass of the composition (A-1), and that a total content mass of the polyfunctional monomer (b1), the inorganic particles (b2), the surfactant (b3), and the polymerization initiator in the composition (B-1) is 95% by mass or more with respect to a total mass of the composition (B-1).

### <Configuration of storage layer (A)>

In the disclosure, the storage layer (A) can be obtained by curing the composition (A-1) containing the polyfunctional monomer (a1), the inorganic particles (a2), and the surfactant (a3). That is, the storage layer (A) is a cured product of the composition (A-1).

A shape of the storage layer (A) in the disclosure may be a plate shape or a film shape.

From the viewpoint that the laminated body exhibits sufficient antifogging properties even after water washing, a thickness of the storage layer (A) is preferably 4.0 µm or more, and more preferably 5.3 µm or more.

Since the amount of the surfactant contained in the storage layer (A) increases as the thickness of the storage layer (A) increases, the antifogging properties and antifogging durability tend to be improved. Therefore, an upper limit of the thickness of the storage layer (A) is not particularly limited as long as the function of the laminated body of the disclosure is not impaired.

From the viewpoint of coatability, the thickness of the storage layer (A) may be 30 µm or less or 20 µm or less.

### <Buffer layer (B)>

In the laminated body of the disclosure, the buffer layer (B) is formed of a cured product of a composition (B-1) containing a polyfunctional monomer (b1) containing two or more epoxy groups and inorganic particles (b2).

The composition (B-1) does not necessarily contain a surfactant, unlike the composition (A-1). However, in the disclosure, the composition (B-1) preferably further contains a surfactant (b3).

The buffer layer (B) preferably has a higher hardness than that of the storage layer (A).

This can impart favorable scratch resistance to the laminated body of the disclosure.

The surfactant (a3) stored in the storage layer (A) exudes to the outside so that the laminated body of the disclosure exhibits high antifogging properties, and the buffer layer (B) also plays a role of controlling an exudation rate of the surfactant (a3).

Hence, the laminated body of the disclosure not only has high antifogging properties, but also can maintain high antifogging properties even after repeated washing with water.

Examples of a method of controlling the exudation rate include a method in which a mass ratio (filler/matrix ratio) of the inorganic particles to the polymer component (in particular, the polymer component corresponding to the polyfunctional monomer) in the buffer layer (B) is made sufficiently larger than that in the storage layer (A), and a method in which after the composition (B-1) for forming the buffer layer (B) is applied, the solvent contained in the applied composition (B-1) is removed by heating, and then the applied composition (B-1) is cured.

### <Polyfunctional monomer (b1)>

The composition (B-1) in the disclosure contains a polyfunctional monomer (b1) containing two or more epoxy groups. The polyfunctional monomer (b1) contains a polyfunctional monomer (b1-1) having a molecular weight per epoxy group in one molecule of 200 g/mol or more.

Examples of the polyfunctional monomer (b1) in the disclosure include the same specific examples as those listed for the polyfunctional monomer (a1). In addition, acceptable and preferred aspects of the polyfunctional monomer (b1) in the disclosure are the same as the acceptable aspect and the preferred aspect listed for the polyfunctional monomer (a1), and the same may apply to the preferred content mass.

Similarly to the polyfunctional monomer (a1), the polyfunctional monomer (b1) contains a polyfunctional monomer (b1-2) having an epoxy equivalent of less than 200 g/mol, in addition to the polyfunctional monomer (b1-1).

The polyfunctional monomer (b1-2) contains a compound represented by the above Formula (1).

Examples of the polyfunctional monomer (b1-1) in the disclosure include the same specific examples as those listed for the polyfunctional monomer (a1-1). In addition, acceptable aspect and preferred aspects of the polyfunctional monomer (b1-1) in the disclosure are the same as the acceptable aspect and the preferred aspect listed for the polyfunctional monomer (a1-1), and the same may apply to the preferred content mass.

For example, a content mass of the polyfunctional monomer (b1-1) with respect to a total content of the polyfunctional monomer (b1-1) and the polyfunctional monomer (b1-2) is the same as the content mass of the polyfunctional monomer (a1-1) with respect to the total content of the polyfunctional monomer (a1-1) and the polyfunctional monomer (a1-2), and the same may apply to the preferred range.

For example, a content mass of the polyfunctional monomer (b1 with respect to a content mass of all the monomers forming the buffer layer (B) is the same as the content mass of the polyfunctional monomer (a1) with respect to the content mass of all the monomers forming the storage layer (A), and the same may apply to the preferred range.

For example, a total content mass of the polyfunctional monomer (b1) and the polyfunctional monomer (b4) with respect to the content mass of all the monomers forming the buffer layer (B) is the same as the total content mass of the polyfunctional monomer (a1) and the polyfunctional monomer (a4) with respect to the content mass of all the monomers forming the storage layer (A), and the same may apply to the preferred range.

For example, a preferred range of the epoxy equivalent in the polyfunctional monomer (b1-1) is the same as the preferred range of the epoxy equivalent in the polyfunctional monomer (a1-1).

Similarly to the polyfunctional monomer (a1-1), the polyfunctional monomer (b1-1) includes an oxyalkylene structure.

For example, similarly to the polyfunctional monomer (a1-1), the oxyalkylene structure that can be included in the polyfunctional monomer (b1-1) may have a hydrophilic group as a substituent.

For example, similarly to the polyfunctional monomer (a1-1), the oxyalkylene structure that can be included in the polyfunctional monomer (b1-1) preferably has an ether bond.

Similarly to the composition (A-1), the composition (B-1) preferably further contains a polyfunctional monomer (b4) containing an oxetane ring.

A preferred range of a content mass of the polyfunctional monomer (b4) containing an oxetane ring with respect to the total mass of the buffer layer (B) is the same as the preferred range of the content mass of the polyfunctional monomer (a4) containing an oxetane ring with respect to the storage layer (A).

The following aspects are suitable for the polyfunctional monomer (a1) and the polyfunctional monomer (b1), the polyfunctional monomer (a1-1) and the polyfunctional monomer (b1-1), the polyfunctional monomer (a1-2) and the polyfunctional monomer (b1-2), and the composition (A-1) and the composition (B-1) in the disclosure.

As described above, in the laminated body of the disclosure, a content of the polyfunctional monomer (b1) may be the same as that in the acceptable aspect indicated for the polyfunctional monomer (a1), but the content mass of the polyfunctional monomer (b1) forming the buffer layer (B) is more preferably from 30% by mass to 70% by mass, still more preferably from 25% by mass to 47.5% by mass with respect to the total mass of the buffer layer (B).

In the laminated body of the disclosure, it is preferable that each of the polyfunctional monomer (a1-1) and the polyfunctional monomer (b1-1) independently have a molecular weight per epoxy group in one molecule of 300 g/mol or more.

In the laminated body of the disclosure, it is preferable that each of the polyfunctional monomer (a1-1) and the polyfunctional monomer (b1-1) independently have a molecular weight per epoxy group in one molecule of 500 g/mol or less.

In the laminated body of the disclosure, the polyfunctional monomer (a1) contains a polyfunctional monomer (a1-2) having a molecular weight per epoxy group in one molecule of less than 200 g/mol, and that the polyfunctional monomer (b1) contains a polyfunctional monomer (b 1-2) having a molecular weight per epoxy group in one molecule of less than 200 g/mol.

In the laminated body of the disclosure, each of the polyfunctional monomer (a1-1) and the polyfunctional monomer (b1-1) independently include an oxyalkylene structure.

In the laminated body of the disclosure, it is preferable that the composition (A-1) further contains the polyfunctional monomer (a4) containing an oxetane ring, and that the composition (B-1) further contains the polyfunctional monomer (b4) containing an oxetane ring.

### <Inorganic particles (b2)>

The composition (B-1) in the disclosure contains inorganic particles (b2).

A content mass of the inorganic particles (b2) is 30% by mass or more with respect to the total mass of the buffer layer (B).

The inorganic particles (b2) used in the disclosure may be inorganic particles (b2-0) that are not modified with a functional group containing an epoxy group (hereinafter, simply referred to also as "inorganic particles (b2-0)"), or may be inorganic particles (b2-1) modified with a functional group containing an epoxy group (hereinafter, simply referred to also as "inorganic particles (b2-1)").

Examples of the inorganic particles (b2) in the disclosure include the same specific examples as the specific examples listed above for the inorganic particles (a2). In addition, acceptable and preferred aspects of the polyfunctional monomer (b2) in the present disclosure are the same as the acceptable and preferred aspects listed for the polyfunctional monomer (a2).

Examples of the inorganic particles (b2-0) and the inorganic particles (b2-1) in the disclosure include the same specific examples as the specific examples listed for the inorganic particles (a2-0) and the inorganic particles (a2-1). In addition, acceptable and preferred aspects of the inorganic particles (b2-0) and the inorganic particles (b2-1) in the disclosure are the same as the acceptable and preferred aspect listed for the inorganic particles (a2-0) and the inorganic particles (a2-1).

When the inorganic particles (a2) are the inorganic particles (a2-0), the inorganic particles (b2) are preferably the inorganic particles (b2-0).

On the other hand, when the inorganic particles (a2) contained in the composition (A-1) contain the inorganic particles (a2-1) (in particular, in a case where the inorganic particles (a2) are the inorganic particles (a2-1)), the inorganic particles (b2) may be the inorganic particles (b2-0), the inorganic particles (b2-1), or a combination thereof.

However, when the inorganic particles (b2) contain both the inorganic particles (b2-0) and the inorganic particles (b2-1), a content mass of the inorganic particles (b2-1) in the composition (B-1) is preferably larger than the content mass of the inorganic particles (b2-0).

In the disclosure, the content mass of the inorganic particles (b2) with respect to the total mass of the buffer layer (B) is 30% by mass or more.

This can improve the scratch resistance of the obtained laminated body.

From the same viewpoint as described above, the content mass of the inorganic particles (b2) with respect to the total mass of the buffer layer (B) is preferably from 40% by mass to 70% by mass, and more preferably from 41.5% by mass to 65% by mass.

When the inorganic particles (b2) contain both the inorganic particles (b2-0) and the inorganic particles (b2-1), preferred ranges of proportions of the inorganic particles (b2-0) and the inorganic particles (b2-1) are the same as the preferred ranges of the proportions of the inorganic particles (a2-0) and the inorganic particles (a2-1) when the inorganic particles (a2) contain both the inorganic particles (a2-0) and the inorganic particles (a2-1).

In the disclosure, the proportion of the content mass of the inorganic particles (b2) to the polyfunctional monomer (b1) for forming the buffer layer (B) is preferably from 0.9/1 to 2.2/1, and more preferably from 1.3/1 to 2.2/1 as a ratio of the content mass of the inorganic particles (b2) to the content mass of the polyfunctional monomer (b1) in the composition (B-1).

Here, since high scratch resistance is obtained for the obtained laminated body, the ratio of the content mass of the inorganic particles (b2) to the content mass of the polyfunctional monomer (b1) in the composition (B-1) is preferably large to some extent.

Also in a relationship with the composition (A-1), the ratio of the content mass of the inorganic particles (b2) to the content mass of the polyfunctional monomer (b1) in the composition (B-1) is preferably larger than the ratio of the content mass of the inorganic particles (a2) to the content mass of the polyfunctional monomer (a1) in the composition (A-1).

In the laminated body of the disclosure, the content mass of the inorganic particles (b2) with respect to the total mass of the buffer layer (B) is larger than the content mass of the inorganic particles (a2) with respect to the storage layer (A).

In the laminated body of the disclosure, the content mass of the inorganic particles (a2) with respect to the storage layer (A) is preferably from 30% by mass to 60% by mass, and the content mass of the inorganic particles (b2) with respect to the total mass of the buffer layer (B) is preferably from 40% by mass to 70% by mass.

### <Surfactant (b3)>

The composition (B-1) in the disclosure may contain a surfactant (b3).

Examples of the surfactant (b3) in the disclosure include the same specific examples as those listed for the surfactant (a3). In addition, acceptable and preferred aspects of the surfactant (b3) in the disclosure are the same as the acceptable and preferred aspects listed for the surfactant (a3).

Since the surfactant (b3) is not an essential component in the composition (B-1), the composition (B-1) need not contain a surfactant.

In the laminated body of the disclosure, the content mass of the surfactant (a3) with respect to the total mass of the storage layer (A) is preferably larger than a content mass of the surfactant (b3) with respect to the total mass of the buffer layer (B).

As a result, the surfactant can be better moved from the storage layer (A) to the buffer layer (B), and the laminated body more effectively exhibits an antifogging effect.

From the above viewpoint, the ratio of the content mass of the surfactant (b3) with respect to the total mass of the buffer layer (B) to the content mass of the surfactant (a3) with respect to the total mass of the storage layer (A) (also referred to as "(b3)/(a3) ratio") is preferably from 0/10 to 8/10, more preferably from 0/10 to 5/10, and still more preferably from 0/10 to 3/10.

When the composition (B-1) contains the surfactant (b3), the content mass of the surfactant (b3) with respect to the total mass of the buffer layer (B) is from more than 0% by mass to less than 1.0% by mass, and preferably from 0.01% by mass to 0.8% by mass.

In the laminated body of the disclosure, it is preferable that the content mass of the surfactant (a3) with respect to the total mass of the storage layer (A) is from 1.0% by mass to 5.0% by mass, and that the buffer layer (B) contains no surfactant, or that the content mass of the surfactant (b3) with respect to the total mass of the buffer layer (B) is from more than 0% by mass to less than 1.0% by mass.

### <Any other surfactant>

The composition (B-1) used in the disclosure can further contain any other surfactant that does not correspond to the surfactant (b3) (hereinafter, "any other surfactant") for imparting leveling property to an applied film or improving surface hydrophilicity thereof regardless of the presence or absence of the surfactant (b3).

Examples of the "any other surfactant" in the composition (B-1) include the same specific examples as those listed as the "any other surfactant" in the composition (A-1). In addition, the acceptable and preferred aspects of the "any other surfactant" in the composition (B-1) are the same as the acceptable and preferred aspects listed for the "any other surfactant" in the composition (A-1), and the same applies to the preferred content mass.

### <Polymerization initiator>

The composition (B-1) preferably contains a polymerization initiator.

Examples of the polymerization initiator in the composition (B-1) include the same specific examples as those listed as the polymerization initiator in the composition (A-1). In addition, the acceptable and preferred aspects of the polymerization initiator in the composition (B-1) in the disclosure are the same as the acceptable and preferred aspects listed as the polymerization initiator in the composition (A-1).

In the laminated body of the disclosure, it is preferable that each of the composition (A-1) and the composition (B-1) independently contain at least one of a thermal polymerization initiator and a photopolymerization initiator as the polymerization initiator.

In the laminated body of the disclosure, it is preferable that each of the composition (A-1) and the composition (B-1) independently contain silica particles and contain an aluminum chelator and a thermal acid generator as the thermal polymerization initiator.

This can improve the scratch resistance of the laminated body.

From the same viewpoint as described above, the silica particles are preferably silica particles that are not modified with a functional group including an epoxy group.

### <Light stabilizer>

The composition (B-1) used in the disclosure preferably further contains a light stabilizer.

Examples of the light stabilizer that can be used in the disclosure include an ultraviolet absorber and a hindered amine light stabilizer.

The ultraviolet absorber is not particularly limited, and various ultraviolet absorbers such as a benzotriazole-based ultraviolet absorber, a triazine-based ultraviolet absorber, a benzophenone-based ultraviolet absorber, a benzoate-based ultraviolet absorber, a propanedioic acid ester-based ultraviolet absorber, and an oxanilide-based ultraviolet absorber can be used.

On the other hand, the hindered amine light stabilizer (abbreviated as HALS) is a generic term for compounds having a 2,2,6,6-tetramethylpiperidine skeleton. In addition, the HALSs are roughly classified into a low molecular weight HALS, a medium molecular weight HALS, a high molecular weight HALS, and a reactive HALS according to the molecular weight.

Examples of the hindered amine light stabilizer include ADK STAB LA-72 and Tinuvin 123.

A specific content mass of the light stabilizer in the buffer layer (B) is preferably 3% by mass or more with respect to the total mass of the buffer layer (B) so that a sufficient light resistance can be secured.

That is, the buffer layer (B) preferably contains the light stabilizer in an amount of 3% by mass or more with respect to the total mass of the buffer layer (B).

On the other hand, an upper limit of the content mass of the light stabilizer is not particularly limited as long as the light stabilizer is appropriately dispersed in the composition (B-1) and the antifogging properties are not impaired, but is preferably 4% by mass or less with respect to the total mass of the buffer layer (B).

In the laminated body of the disclosure, it is preferable that the total content mass of the polyfunctional monomer (a1), the inorganic particles (a2), the surfactant (a3), and the polymerization initiator in the composition (A-1) is 95% by mass or more with respect to the total mass of the composition (A-1), and that the total content mass of the polyfunctional monomer (b 1), the inorganic particles (b2), the surfactant (b3), and the polymerization initiator in the composition (B-1) is 95% by mass or more with respect to a total mass of the composition (B-1).

The composition (B-1) may contain a solvent.

Specific examples of the solvent contained in the composition (B-1) are the same as the specific examples of the solvent contained in the composition (A-1).

Preferred aspects of the solvent contained in the composition (B-1) are the same as the preferred aspects of the solvent contained in the composition (A-1).

### <Configuration of buffer layer (B)>

In the disclosure, the buffer layer (B) can be obtained by curing the composition (B-1) containing the polyfunctional monomer (b1), the inorganic particles (b2), and, optionally, the surfactant (b3). That is, the buffer layer (B) is a cured product of the composition (B-1).

Examples of the configuration of the buffer layer (B) include the same aspects as the aspects listed as the configuration of the storage layer (A). In addition, acceptable and preferred aspects of the configuration of the buffer layer (B) in the disclosure are the same as the acceptable and preferred aspects listed as the configuration of the storage layer (A).

### <Substrate>

Examples of the substrate used in the laminated body of the disclosure include inorganic substrates made of inorganic materials such as glass, silica, metals, and metal oxides; plastic substrate including poly(meth)acrylates such as polymethyl methacrylate (PMMA), polyurethane, polythiourethane, polycarbonate, polyallyl carbonate, polyethylene terephthalate, polyacetyl cellulose (TAC), acrylonitrile-butadiene-styrene copolymer (ABS), polyethylene, polypropylene, polystyrene, epoxy resin, vinyl chloride resin, and silicone resin; paper substrates; pulp substrates; and organic inorganic substrates such as SMC and BMC in which an unsaturated polyester resin, a filler such as calcium carbonate, and glass fibers are combined.

Further, a laminated substrate including the above-described substrate and a paint cured product layer can also be exemplified.

Among the above, the substrate is preferably a plastic substrate.

Among the above, the substrate preferably contains polythiourethane, polycarbonate, or polyallyl carbonate, and more preferably contains polythiourethane or polycarbonate, from the viewpoint of unnecessity for primer treatment.

Examples of the shape of the substrate include a plate shape and a lens shape.

As the substrate, a lens-shaped plastic substrate (that is, a plastic lens) is preferable.

In addition, the surface of the substrate can be subjected to a physical or chemical treatment such as corona treatment, ozone treatment, low-temperature plasma treatment using oxygen gas, or nitrogen gas, glow discharge treatment, oxidation treatment using a chemical, or flame treatment, if necessary, for the purpose of activating the surface of the substrate. In addition, instead of or in addition to the above treatment, primer treatment, undercoat treatment, or anchor coat treatment may be performed.

Examples of a coating agent usable for the primer treatment, the undercoat treatment, or the anchor coating treatment can include a coating agent containing, as a main component, a resin such as a polyester-based resin, a polyamide-based resin, a polyurethane-based resin, an epoxy resin, a phenol-based resin, a (meth)acrylic resin, a polyvinyl acetate-based resin, a polyolefin-based resin such as polyethylene or polypropylene or a copolymer or a modified resin thereof, or a cellulose-based resin. The coating agent used here may be a conventionally known coating agent usually used in the field to which the disclosure belongs, and the coating agent can also be applied by a known coating method. An amount of the coating agent applied to the substrate is preferably from 0.5 µm to 10 µm in a dry state.

### <Configuration of laminated body>

As described above, the laminated body according to the disclosure includes the substrate, the storage layer (A), and the buffer layer (B) disposed in this order.

Each of the storage layer (A) and the buffer layer (B) included in the laminated body according to the disclosure may have only one layer or two or more layers, and the storage layer (A) and the buffer layer (B) are preferably in direct contact with each other.

In the laminated body of the disclosure, a ratio (film thickness ratio) of a thickness of the storage layer (A) to a thickness of the buffer layer (B) is preferably a certain value or more from the viewpoint of securing sufficiently high antifogging properties and hydrophilicity of the laminated body after water washing.

Specifically, the film thickness ratio is preferably 1.3 or more, more preferably 1.5 or more, and still more preferably 1.7 or more.

On the other hand, an upper limit of the film thickness ratio is not particularly limited as long as the present disclosure can be appropriately implemented in practical use, but is preferably 15 or less, more preferably 5 or less, and still more preferably 3.5 or less.

In the laminated body of the disclosure, for example, from the viewpoint of favorably maintaining high antifogging properties and high hydrophilicity even after washing the laminated body with water, the ratio of the thickness of the storage layer (A) to the thickness of the buffer layer (B) is preferably in a range of from 1.3 to 15, more preferably in a range of from 1.5 to 5, and still more preferably in a range of from 1.7 to 3.5.

In one of preferred aspects of the disclosure, the laminated body includes only the substrate, the storage layer (A), and the buffer layer (B). However, the laminated body of the disclosure is not limited to those of the aspects, and may further include, in addition to the substrate, the storage layer (A), and the buffer layer (B), any other layer that is not the substrate, the storage layer (A), or the buffer layer (B).

### <Any other component>

In addition to the substrate, the storage layer (A), and the buffer layer (B), the laminated body of the disclosure may further include any other layer that is not the substrate, the storage layer (A), or the buffer layer (B) (hereinafter, "any other layer").

Examples of such "any other layer" include a primer layer, a hard coat layer, and an adhesive layer. The primer layer is a layer made of an adhesive (primer), and may be adopted to improve adhesiveness between two layers located so as to sandwich the layer. The laminated body of the disclosure can exhibit sufficient adhesiveness for a substrate containing polyallyl carbonate, or polythiourethane without providing a primer layer.

### <Method of manufacturing laminated body>

T method of manufacturing a laminated body in the present disclosure is not particularly limited.

Examples of the method of manufacturing a laminated body in the disclosure include the following manufacture method A.

The manufacture method A includes:
a step (S1) of providing an applied material layer (A2) of a composition (A-1a) containing a polyfunctional monomer (a1) containing two or more epoxy groups, inorganic particles (a2), a surfactant (a3), and a solvent (a4) on at least one surface of a substrate;
a step (S2) of removing the solvent (a4) from the applied material layer (A2);
a step (S3) of curing the applied material layer (A2) to obtain a storage layer (A);
a step (S4) of providing an applied material layer (B2) of a composition (B-1a) containing a polyfunctional monomer (b1) containing two or more epoxy groups, inorganic particles (b2), a surfactant (b3), and a solvent (b4) on the storage layer (A) after the step (S3);
a step (S5) of removing the solvent (b4) from the applied material layer (B2); and
a step (S6) of curing the applied material layer (B2) to obtain a buffer layer (B).

### <Step (S1)>

In the manufacture method A, the step (S1) is a step of providing an applied material layer (A2) of a composition (A-1a) containing the polyfunctional monomer (a1), the inorganic particles (a2), and the surfactant (a3) on at least one surface of the substrate.

As the "polyfunctional monomer (a1)", the "inorganic particles (a2)", and the "surfactant (a3)", the "polyfunctional monomer (a1)", the "inorganic particles (a2)", and the "surfactant (a3)" described in the above section "Storage layer (A)" are respectively used, and the amount of each of the components blended can also be the amount described in the above section "Storage layer (A)". As the "substrate", the substrate described in the above section "Substrate" is used.

The "solvent (a4)" is not an essential component of the storage layer (A) *per se* and is therefore also not an essential component of the composition (A-1a).

However, in one aspect of the disclosure, when the storage layer (A) is manufactured, a step of applying the composition (A-1a) is performed. Therefore, the solvent (a4) is used so that the composition (A-1a) is brought into a form suitable for application.

Here, in the present specification, the composition (A-1) containing the solvent (a4) will be referred to as "composition (A-1a)".

The composition (A-1a) can be obtained by mixing the polyfunctional monomer (a1), the inorganic particles (a2), the surfactant (a3), and, if necessary, the solvent (a4). At this time, the solvent (a4) may be added separately from the polyfunctional monomer (a1), the inorganic particles (a2), and the surfactant (a3), , or may be added together with one or more of the polyfunctional monomer (a1), the inorganic particles (a2), and the surfactant (a3).

For example, when the inorganic particles (a2) are used in the form of a sol or a slurry, a solvent as a component of the sol or the slurry may be as a component of the solvent (a4). When the surfactant (a3) or the like is used in the form of a solution, a solvent as a component of the solution may be as a component of the solvent (a4).

In the composition (A-1a), a polymerization initiator may be added as appropriate in addition to the polyfunctional monomer (a1), the inorganic particles (a2), the surfactant (a3), and the solvent (a4) in preparation for the step (S3) which will be described later.

As the polymerization initiator, the above-listed polymerization initiators can be used.

For example, when the composition (A-1a) is composed of the polyfunctional monomer (a1), an inorganic particle sol composed of the inorganic particles (a2) and a first solvent, the surfactant (a3), the photopolymerization initiator, and a second solvent, the "total dry mass of the composition (A-1a)" refers to a total mass of the polyfunctional monomer (a1), the inorganic particles (a2), the first solvent, the surfactant (a3), and the photopolymerization initiator.

Application of the composition (A-1a) to the substrate can be performed as appropriate by a conventionally known method. Examples of such an application method include a spin coating method, a dip coating method, a spray coating method, a flow coating method, a brush coating method, a gravure coating method, a reverse roll coating method, a knife coating method, and a kiss coating method. By the application, an applied material layer (A2) of the composition (A-1a) is obtained.

Here, prior to the step (S1), an adhesive (primer) may be applied and disposed between the substrate and the storage layer (A) in order to improve adhesion, or the surface of the substrate may be subjected to a surface treatment such as plasma treatment, corona treatment, or polishing.

In addition, for the purpose of improving hardness, a hard coated material may be used as the substrate, or a hard coat layer may be disclosed on the substrate by a known method, and the storage layer (A) and the buffer layer (B) may be formed thereon.

Furthermore, for the purpose of imparting any other function, a substance other than the above ones may be disposed between the substrate and the storage layer (A).

Furthermore, for example, for the purpose of controlling surface energy of an outermost layer, the buffer layer (B) as the outermost layer may be subjected to a surface treatment, or a graft treatment may be performed with a compound having reactivity with the buffer layer (B) as the outermost layer.

In any case, a precursor laminated body (PL1) having the substrate and the applied material layer (A2) is obtained by this step (S1). The precursor laminated body (PL1) is subjected to the step (S2) which will be described subsequently.

### <Step (S2)>

When the composition (A-1a) contains the solvent (a4), the step (S2) of removing the solvent (a4) from the applied material layer (A2) obtained in the step (S1) may be performed.

As for the residual solvent after the application of the composition (A-1a) to the substrate and immediately before polymerization curing, if an amount of the residual solvent is large, adhesion to the substrate tends to be deteriorated. Therefore, it tends to be preferable that the amount of the residual solvent in the composition (A-1a) is small. Therefore, prior to the polymerization curing, the solvent (a4) is removed from the applied material layer (A2).

The step (S2) may be performed by naturally drying the precursor laminated body (PL1) obtained in the step (S1) or by heating the precursor laminated body (PL1) obtained in the step (S1).

### <Step (S3)>

The step (S3) is a step of curing the applied material layer (A2) to obtain a storage layer (A).

The applied material layer (A2) can be cured by radiation exposure or heating.

Here, when the composition (A-1a) is polymerized and cured by radiation exposure, for example, ultraviolet (UV) irradiation, an applied material layer containing a photopolymerization initiator may be used as the applied material layer (A2).

In this case, the above-described photopolymerization initiator will be added to the composition (A-1a) manufactured in the step (S1).

When the composition (A-1a) is polymerized using radiation, an energy ray having a wavelength region of from 0.0001 nm to 800 nm can be used as the radiation. The radiation can be classified into α-rays, β-rays, γ-rays, X-rays, electron beams, ultraviolet rays, and visible light, , and can be selected as appropriate and used according to the components included in the composition (A-1a).

In the case of polymerization by heat, an applied material layer containing a thermal polymerization initiator such as a thermal acid generator may be used as the applied material layer (A2). In this case, the above-described thermal polymerization initiator will be added to the composition (A-1a) manufactured in the step (S1).

When the composition (A-1a) is polymerized by heat, heating is performed in a range of from room temperature to 150°C. A heating time in this case can be set as appropriate. The polymerization can also be performed in the air, but the polymerization is preferably performed in an inert gas atmosphere such as nitrogen since the polymerization time can be shortened.

By the radiation exposure or heating as described above, a polymerization reaction of the polyfunctional monomer (a1) contained in the applied material layer (A2) proceeds, and the polyfunctional monomer (a1) is converted into a corresponding polymer. As a result, the applied material layer (A2) will be converted into the storage layer (A) containing such a polymer.

In other words, by this step (S3), a precursor laminated body (PL3) having the substrate and the storage layer (A) is obtained. The precursor laminated body (PL3) is subjected to the step (S4) which will be described subsequently.

### <Step (S4)>

The step (S4) is a step of providing an applied material layer (B2) of a composition (B-1a) containing the polyfunctional monomer (b1), the inorganic particles (b2), and a solvent (b4) on the storage layer (A) after the step (S3).

Here, as the "polyfunctional monomer (b1)" and the "inorganic particles (b2)", the "polyfunctional monomer (b1)" and the "inorganic particles (b2)" described in the above section "Buffer layer (B)" are used, respectively.

The composition (B-1a) may contain or need not contain the "surfactant (b3)" described in the above section "Buffer layer (B)".

However, when the composition (B-1a) contains the surfactant (b3), the content mass of the surfactant (b3) with respect to the total dry mass of the composition (B-1) is preferably smaller than the content mass of the surfactant (a3) with respect to the total dry mass of the composition (A-1a).

The composition (B-1a) may contain one or more of the "any other surfactant" and "light stabilizer" described in the above section "Buffer layer (B)".

An amount of each of the "polyfunctional monomer (b1)", the "inorganic particles (b2)", and, if necessary, the "surfactant (b3)" blended can also be the amounts described in the above section "Buffer layer (B)".

The "solvent (b4)" is not an essential component of the buffer layer (B) *per se* and is therefore also not an essential component of the composition (B-1). However, in one aspect of the disclosure, when the buffer layer (B) is manufactured, a step of applying the composition (B-1) is performed. Therefore, the solvent (b4) is used so that the composition (B-1) is brought into a form suitable for application. Here, in the present specification, the composition (B-1) containing the solvent (b4) will be referred to as "composition (B-1a)".

The kind of the solvent (b4) is not particularly limited, but the solvent (b4) is preferably a solvent in which the components of the composition (B-1a) that is cured to form the buffer layer (B) are not separated. Specific examples of such a solvent (b4) may include the same solvents as those listed above for the solvent (a4). The solvent (b4) may be the same as or different from the solvent (a4).

Here, the composition (B-1a) can be obtained by mixing the polyfunctional monomer (b1), the inorganic particles (b2), and the solvent (b4). At this time, the solvent (b4) may be added separately from the polyfunctional monomer (b1), and the inorganic particles (b2), or may be added together with one or more of the polyfunctional monomer (b1), and the inorganic particles (b2).

For example, when the inorganic particles (b2) are used in the form of a sol or a slurry, a solvent as a component of the sol or the slurry may be as a component of the solvent (b4). When the surfactant (b3) or the like is used in the form of a solution in the composition (B-1a), a solvent as a component of the solution may be as a component of the solvent (b4).

In addition, in the composition (B-1a), a conventionally known photopolymerization initiator or thermal polymerization initiator may be added as appropriate in addition to the polyfunctional monomer (b1), the inorganic particles (b2), and the solvent (b4) in preparation for the step (S6) which will be described later.

The photopolymerization initiator and the thermal polymerization initiator that can be added to the composition (B-1a) can be the same as the photopolymerization initiator and the thermal polymerization initiator that can be added to the composition (A-1a), respectively.

Amounts of the photopolymerization initiator, a photopolymerization accelerator, and the thermal polymerization initiator used are preferably from 1% by mass to 10% by mass, and more preferably from 3% by mass to 6% by mass, with respect to the total dry mass of the composition (B-1a).

When the buffer layer (B) is formed by application, the thickness of the buffer layer (B) can be adjusted by adjusting the amount of the solvent (b4) contained in the composition (B-1a).

The total dry mass of the composition (B-1a) per 100 parts by mass of the composition (B-1a) is preferably 35 parts by mass or more, and more preferably 37.5 parts by mass or more, so that the resulting buffer layer (B) can have a thickness necessary for having a sufficient strength.

On the other hand, the total dry mass of the composition (B-1a) per 100 parts by mass of the composition (B-1a) is less than 100 parts by mass, and is preferably 50 parts by mass or less so as to obtain fluidity required for application.

For example, when the composition (B-1a) is composed of the polyfunctional monomer (b1), an inorganic particle sol composed of the inorganic particles (b2) and a first solvent, a dispersion liquid composed of the surfactant (b3) and a second solvent, a dispersion liquid composed of any other surfactant as described above and a third solvent, the light stabilizer, the photopolymerization initiator, and a fifth solvent, the total dry mass of the composition (B-1a) refers to a total mass of the polyfunctional monomer (b1), the inorganic particles (b2), the surfactant (b3), any other surfactant as described above, the light stabilizer, and the photopolymerization initiator.

The application of the composition (B-1a) to the storage layer (A) can be performed in the same manner as the application of the composition (A-1a) described for the above step (S1). By this step (S4), a precursor laminated body (PL4) having the substrate, the storage layer (A) and the applied material layer (B2) disposed in this order is obtained. The precursor laminated body (PL4) is subjected to the step (S5) which will be described subsequently.

### <Step (S5)>

The step (S5) is a step of removing the solvent (b4) from the applied material layer (B2) obtained in the step (S4).

Similarly to the step (S2), the step (S5) may be performed by naturally drying the precursor laminated body (PL4) obtained in the step (S4) or by heating the precursor laminated body (PL4) obtained in the step (S4).

However, in this step (S5), the precursor laminated body (PL4) is preferably heated at from 50°C to 90°C, that is, the step (S5) is preferably performed under heating at from 50°C to 90°C, since a laminated body having a sufficiently high hardness can be obtained after the step (S6) even when the amount of the inorganic particles (b2) with respect to the polyfunctional monomer (b1) is small. This is presumably because the heating makes the crosslinked state denser during curing in the subsequent step (S6).

In addition, this heating is advantageously performed since the degree of crosslinking of the buffer layer (B) obtained in the form of the buffer layer (B) after the step (S6) can be further increased even in a situation where the content mass of the polyfunctional monomer (b1) with respect to the total dry mass of the composition (B-1) is smaller than the content mass of the polyfunctional monomer (a1) with respect to the total dry mass of the composition (A-1a).

A heating time in the case of performing the heating in this step (S5) is preferably from 3 minutes to 20 minutes.

### <Step (S6)>

The step (S6) is a step of curing the applied material layer (B2) to obtain a buffer layer (B).

Here, when the composition (B-1a) is polymerized and cured by radiation exposure, for example, ultraviolet (UV) irradiation, an applied material layer containing a photopolymerization initiator may be used as the applied material layer (B2). In this case, the above-described photopolymerization initiator will be added to the composition (B-1a) manufactured in the step (S4).

When the composition (B-1a) is polymerized using radiation, wavelength and irradiation time of the radiation can be the same as those in the step (S4). In the case of polymerization by heat, an applied material layer containing a thermal polymerization initiator such as a thermal acid generator may be used as the applied material layer (B2).

In this case, the above-described thermal polymerization initiator will be added to the composition (B-1a) manufactured in the step (S4). When the composition (B-1a) is polymerized by heat, a heating temperature and a heating time can be the same as those in the step (S4).

By the radiation exposure or heating as described above, a polymerization reaction of the polyfunctional monomer (b1) contained in the applied material layer (B2) proceeds, and the polyfunctional monomer (b1) is converted into a corresponding polymer. As a result, the applied material layer (B2) will be converted into the buffer layer (B) containing such a polymer. In other words, by this step (S6), a laminated body having the substrate, the storage layer (A), and the buffer layer (B) disposed in this order is obtained.

The laminated body of the present disclosure can be obtained through the above steps (S1) to (S6).

The step (S2) and step (S3) may be performed simultaneously, or the step (S3) may be performed after the step (S2).

The step (S5) and step (S6) may be performed simultaneously, or the step (S6) may be performed after the step (S5).

As described above, when the storage layer (A) is formed by application, the thickness of the storage layer (A) can be adjusted by adjusting the amount of the solvent (a4) contained in the composition (A-1a).

From the above viewpoint, for example, in the method of manufacturing a laminated body of the disclosure, the total dry mass of the composition (A-1a) per 100 parts by mass of the composition (A-1a) may be from 46 parts by mass to less than 100 parts by mass, or may be from 55 parts by mass to 65 parts by mass.

The laminated body obtained in the disclosure and laminated bodies including the laminated body can be suitably used as an antifogging material, an antifouling material, a fast-drying material, a dew condensation preventing material, and an antistatic material.

Such a laminated body of the present disclosure can be applied to various intended uses including optical articles such as optical films, optical disks, optical lenses, spectacle lenses, spectacles, sunglasses, goggles, helmet shields, head lamps, tail lamps, and window glasses of vehicles and buildings, and materials thereof.

### <Antifogging film forming composition>

An antifogging film forming composition may contain: a polyfunctional monomer (x1) containing two or more epoxy groups; inorganic particles (x2); and a surfactant (x3). A content mass of the inorganic particles (x2) with respect to a total dry mass of the antifogging film forming composition is 30% by mass or more. The polyfunctional monomer (x1) contains a polyfunctional monomer (x1-1) having a molecular weight per epoxy group in one molecule of 200 g/mol or more.

An antifogging film can be obtained by curing the antifogging film forming composition.

In the antifogging film forming composition, the polyfunctional monomer (x1) containing two or more epoxy groups, the inorganic particles (x2), and the surfactant (x3) can be the polyfunctional monomer (a1) or the polyfunctional monomer (b 1), the inorganic particles (a2) or the inorganic particles (b2), and the surfactant (a3) or the surfactant (b3).

### <Set of antifogging film forming compositions>

A set of antifogging film forming compositions may include:
an antifogging film forming composition A containing a polyfunctional monomer (x1A) containing two or more epoxy groups, inorganic particles (x2A), and a surfactant (x3A); and an antifogging film forming composition B containing a polyfunctional monomer (x1B) containing two or more epoxy groups, inorganic particles (x2B), and a surfactant (x3B).

In the composition A, a content mass of the inorganic particles (x2A) with respect to a total dry mass of the antifogging film forming composition A is 30% by mass or more, and the polyfunctional monomer (x1A) contains a polyfunctional monomer (x1-1A) having a molecular weight per epoxy group in one molecule of 200 g/mol or more.

In the composition B, a content mass of the inorganic particles (x2B) with respect to a total dry mass of the antifogging film forming composition B is 30% by mass or more, and the polyfunctional monomer (x1B) contains a polyfunctional monomer (x1-1B) having a molecular weight per epoxy group in one molecule of 200 g/mol or more.

A content mass of the inorganic particles (x2B) with respect to the total dry mass of the antifogging film forming composition B is larger than a content mass of the inorganic particles (x2A) with respect to the total dry mass of the antifogging film forming composition A.

According to the set of antifogging film forming compositions, an antifogging film having a favorable mechanical strength and excellent antifogging properties can be obtained. That is, according to the set of antifogging film forming compositions, a laminated body having a favorable mechanical strength and excellent antifogging properties can be obtained.

In the set of antifogging film forming compositions of the disclosure, for example, the polyfunctional monomer (a1), the inorganic particles (a2), and the surfactant (a3) described above can be used as the polyfunctional monomer (x1A), the inorganic particles (x2A), and the surfactant (x3A), and
the polyfunctional monomer (b1), the inorganic particles (b2), and the surfactant (b3) described above can be used as the polyfunctional monomer (x1B), the inorganic particles (x2B), and the surfactant (x3B).

Thus, the set of antifogging film forming compositions can be used to manufacture the laminated body of the disclosure having a favorable mechanical strength and excellent antifogging properties.

### EXAMPLES

Hereinafter, the present disclosure will be described in more detail with reference to examples, but the invention of the disclosure is not limited only to these examples.

### [Evaluation of physical properties of laminated body]

In the Examples, physical properties of each laminated body were evaluated as follows.

### (Measurement of film thickness)

The film thickness of each layer was calculated by spectroscopic measurement. Specifically, spectral reflectance was measured for the vicinity of a center of a film formation sample using a film thickness measuring apparatus (ETA-ARC, manufactured by OPTOTECH), and a film thickness of each single layer or the two-layer laminated state was calculated from the obtained spectral reflectance by a Fourier transform method.

### (Breath antifogging property)

Breath was blown onto a surface of the buffer layer in the laminated body for several seconds to visually confirm presence or absence of fogging on the surface of the buffer layer in the laminated body, and evaluation was performed according to the following evaluation criteria.

The evaluation of the breath antifogging property was performed on the laminated body that had been left to stand at room temperature 22°C for 1 hour.

In addition, in the following Examples and Comparative Examples, the "initial breath antifogging property" refers to the breath antifogging property of the laminated body before "evaluation after immersion in pure water" which will be described later.

### - Evaluation criteria -

A: When breath was blown, the surface of the buffer layer in the laminated body was not fogged.
B: When breath was blown, the surface of the buffer layer in the laminated body was fogged.

### (Contact angle)

A contact angle of pure water on the surface of the buffer layer of the laminated body was measured using a contact angle meter (DropMaster Model DMs-401, manufactured by Kyowa Interface Science Co., Ltd.). The measurement was performed at three points for one sample, and an average value of these values was taken as a value of the contact angle.

Here, as the value of the contact angle, the contact angle after 21 seconds from droplet arrival is indicated.

In the following Examples and Comparative Examples, the "initial contact angle" refers to the contact angle of the laminated body before the "evaluation after immersion in pure water" which will be described later.

### (50°C Steam antifogging property)

Pure water was put in a beaker, and heated to 50°C. After a temperature of the pure water in the beaker reached 50°C, the laminated body was placed on an upper portion of the beaker and retained for 10 minutes. Then, in that state, the laminated body was visually observed from above to confirm whether the sample was fogged or the image was distorted. A time from the start of the retention until fogging of the laminated body or image distortion was confirmed is indicated in Table 1.

Note that the "> 10 min" in Table 1 means that no fogging of the laminated body or image distortion was confirmed within 10 minutes after the start of the retention.

In the following Examples and Comparative Examples, the "initial 50°C steam antifogging property" refers to 50°C steam antifogging property of the laminated body before the "evaluation after immersion in pure water" which will be described later.

### (Evaluation after Immersion in pure water)

The laminated body was immersed in pure water for 1 hour and dried using an air blow, and then the breath antifogging property, the contact angle, and the 50°C steam antifogging property were evaluated.

The influence of immersion in pure water for 1 hour on the breath antifogging property, the contact angle, and the 50°C steam antifogging property was evaluated based on the above to evaluate antifogging durability.

### <Examples 1 to 10 and Comparative Example 2>

### (Preparation of storage layer forming composition (A-1))

Under a normal-temperature and normal-pressure environment, each of the surfactant (a3) as indicated in Tables 1 and 2 and the inorganic particles (a2) as indicated in Tables 1 and 2 was added to a glass screw tube bottle in an amount corresponding to the content mass as indicated in Tables 1 and 2. Further, the mixture was stirred using a magnet stirrer and a stirrer until the surfactant was completely dissolved.

Next, the polyfunctional monomer (a1) and the polyfunctional monomer (a4) as indicated in Tables 1 and 2 were added to the glass screw tube bottle after stirring in amounts corresponding to the content masses as indicated in Tables 1 and 2, and the mixture was stirred well until they became compatible. Then, the polymerization initiator as indicated in Tables 1 and 2 was added to the glass screw tube bottle after stirring in an amount corresponding to the content mass as indicated in Tables 1 and 2, and the mixture was stirred until it was completely dissolved, thereby obtaining a storage layer forming composition (A-1), which was a liquid composition.

### (Preparation of buffer layer forming composition (B-1))

Under a normal-temperature and normal-pressure environment, each of the surfactant (b3) as indicated in Tables 1 and 2 and the inorganic particles (b2) as indicated in Tables 1 and 2 was added to a glass screw tube bottle in an amount corresponding to the content mass as indicated in Tables 1 and 2. Further, the mixture was stirred using a magnet stirrer and a stirrer until the surfactant was completely dissolved.

Next, the solvent as indicated in Tables 1 and 2 and the polyfunctional monomer (b1) and the polyfunctional monomer (b4) as indicated in Tables 1 and 2 were each added to the glass screw tube bottle after stirring in an amount corresponding to the content mass as indicated in Tables 1 and 2, and the mixture was stirred well until they became compatible. Then, the polymerization initiator as indicated in Tables 1 and 2 was added to the glass screw tube bottle after stirring in an amount corresponding to the content mass as indicated in Tables 1 and 2, and the mixture was stirred until it was completely dissolved, thereby obtaining a buffer layer forming composition (B-1), which was a liquid composition.

The content mass (% by mass) of the solvent (propylene glycol monoethyl ether) contained in the buffer layer forming composition (B-1) as indicated in Tables 1 and 2 is the content mass thereof with respect to the total content mass, where the total content mass of the components contained in the buffer layer forming composition (B-1) other than the solvent is 100% by mass.

### (Manufacture of laminated body)

The storage layer forming composition (A-1) was applied to CR-39 (φ 70) (polyallyl carbonate plate (65 mm in length × 65 mm in width × 2 mm in thickness)) by spin coating. The spin coating was performed by using the storage layer forming composition (A-1) as a coating liquid, flowing the coating liquid from above the CR-39 plate while the CR-39 plate was rotated at 500 rpm for 10 seconds, gradually spreading the coating liquid on the plate, and then rotating the plate at 1000 rpm for 10 seconds, thereby obtaining a first applied film (that is, first applied material layer).

Subsequently, the first applied film formed on the CR-39 plate was heated at 110°C for 30 minutes to cure the first applied film, thereby obtaining a storage layer.

Next, the buffer layer forming composition (B-1) was applied onto the storage layer by spin coating to obtain a second applied film (that is, second applied material layer). At this time, the buffer layer forming composition (B-1) was applied under the same conditions as the spin coating conditions when the applied film (A-1) was formed.

Subsequently, the second applied film formed on the storage layer was heated at 110°C for 60 minutes to remove the solvent in the second applied film, and the first applied film was cured to obtain a buffer layer.

By the above operation, a transparent laminated body including the CR-39 plate, the storage layer, and the buffer layer disposed in this order was obtained.

### <Comparative Example 1>

The same operation as in Example 1 was performed except that the kinds and content masses of the surfactant (a3), the inorganic particles (a2), the polyfunctional monomer (a1), the polyfunctional monomer (a4), and the polymerization initiator were changed as indicated in Table 2 in the preparation of the storage layer forming composition (A-1), the buffer layer forming composition (B-1) was not used, and the operation for obtaining a buffer layer was not performed.

That is, the laminated body of Comparative Example 1 is a laminated body including the CR-39 plate and the storage layer and not including a buffer layer.

The evaluation results of each of Examples 1 to 10 and Comparative Examples 1 and 2 are indicated in Table 1 or Table 2 below.

In all of the laminated bodies obtained in Examples 1 to 10 and the laminated body obtained in Comparative Example 2, the film thickness of the storage layer was 8.0 µm, and the film thickness of the buffer layer was 3.0 µm.

In the laminated body obtained in Comparative Example 2, the film thickness of the storage layer was 8.0 µm.

**[Table 1]**

| | | | | Example 1 | Example 2 | Example 3 | Example 4 | Example 5 |
|---|---|---|---|---|---|---|---|---|
| Storage layer (A-1) | Storage layer forming composition | | | A1 | A2 | A3 | A4 | A5 |
| | Inorganic particles (a2) | Epoxy-modified silica sol solid content: 30% by mass | | 52.4% | 52.4% | 57.6% | 61.7% | - |
| | | Epoxy-unmodified silica sol solid content: 30% by mass | | - | - | - | - | 48.3% |
| | Polyfunctional monomer (a1) | DENACOL EX-841 epoxy equivalent: 372, molecular weight: 702 | | 10.9% | 10.9% | 9.6% | 8.6% | 14.9% |
| | | DENACOL EX-1610 epoxy equivalent: 170, molecular weight: 868 | | 26.2% | 26.2% | 23.0% | 20.6% | - |
| | | DENACOL EX-313 epoxy equivalent: 141, molecular weight: 204 | | - | - | - | - | 25.3% |
| | Polyfunctional monomer (a4) | ARON OXETANE OXT-221 | | 6.5% | 6.5% | 5.8% | 5.1% | 7.5% |
| | Polymerization initiator | San Aid SI-60L solid content: 32% by mass | | 1.0% | - | - | - | - |
| | | Alumichelate A(W) | | - | 1.0% | 1.0% | 1.0% | 1.0% |
| | Surfactant (a3) | NOIGEN LP-100 | | 3.00% | 3.00% | 3.00% | 3.00% | 3.00% |
| | Inorganic particles (a2)/polyfunctional monomer (a1) mass ratio | | | 1.2 | 1.2 | 1.5 | 1.8 | 1 |
| Storage layer (B-1) | Buffer layer forming composition | | | B1 | B2 | B3 | B4 | B5 |
| | Inorganic particles (b2) | Epoxy-modified silica sol solid content: 30% by mass | | 64.5% | 58.5% | 63.3% | 65.8% | - |
| | | Epoxy-unmodified silica sol solid content: 30% by mass | | - | - | - | - | 59.1% |
| | Polyfunctional monomer (b1) | DENACOL EX-841 epoxy equivalent: 372, molecular weight: 702 | | 8.5% | 9.8% | 8.9% | 8.2% | 9.9% |
| | | DENACOL EX-1610 epoxy equivalent: 170, molecular weight: 868 | | 20.4% | 13.6% | 12.3% | 11.4% | - |
| | | DENACOL EX-313 epoxy equivalent: 141, molecular weight: 204 | | - | 15.6% | 14.0% | 13.1% | 23.6% |
| | Polyfunctional monomer (b4) | ARON OXETANE OXT-221 | | 5.1% | - | - | - | 5.9% |
| | Solvent | Propylene glycol monoethyl ether | | 0% | 5.6% | 0% | 0% | 4.8% |
| | Polymerization initiator | San Aid SI-60L solid content: 32% by mass | | 1.0% | - | - | - | - |
| | | Alumichelate A(W) | | - | 2.0% | 1.0% | 1.0% | 1.0% |
| | Surfactant (b3) | NOIGEN LP-100 | | 0.50% | 0.50% | 0.50% | 0.50% | 0.50% |
| | Inorganic particles (b2)/polyfunctional monomer (b1) mass ratio | | | 1.8 | 1.5 | 1.8 | 2.0 | 1.5 |
| Evaluation results | | Initial | Breath antifogging property | A | A | A | A | A |
| | | | Contact angle (°) | 2.1 | 2.7 | 3.4 | 5.1 | 3.4 |
| | | | 50°C Steam antifogging property | > 10 min | > 10 min | > 10 min | > 10 min | > 10 min |
| | | After 1 h immersion in pure water | Breath antifogging property | A | A | A | A | A |
| | | | Contact angle (°) | 4.6 | 6.7 | 8.5 | 25.3 | 4.0 |
| | | | 50°C Steam antifogging | > 10 min | > 10 min | > 10 min | > 10 min | > 10 min |
| | | property | | | | | | |

**[Table 2]**

| | | | | Example 6 | Example 7 | Example 8 | Example 9 | Example 10 | Comparative Example 1 | Comparative Example 2 |
|---|---|---|---|---|---|---|---|---|---|---|
| Storage layer (A-1) | Storage layer forming composition | | | A6 | A7 | A8 | A9 | A10 | A11 | A12 |
| | Inorganic particles (a2) | Epoxy-modified silica sol solid content: 30% by mass | | - | - | - | 26.2% | 52.4% | 52.4% | 52.4% |
| | | Epoxy-unmodified silica sol solid content: 30% by mass | | 48.3% | 56.7% | 56.7% | 26.20% | - | - | - |
| | Polyfunctional monomer (a1) | DENACOL EX-841 epoxy equivalent: 372, molecular weight: 702 | | 14.9% | 11.2% | 11.2% | 10.9% | 10.9% | - | - |
| | | DENACOL EX-1610 epoxy equivalent: 170, molecular weight: 868 | | - | - | - | 26.2% | 26.2% | 43.6%, | 43.6% |
| | | DENACOL EX-313 epoxy equivalent: 141, molecular weight: 204 | | 25.3% | 18.9% | 18.9% | - | - | - | - |
| | | ARON OXETANE OXT-221 | | 7.5% | 7.7% | 7.7% | 6.5% | 6.5% | - | - |
| | Polymerization initiator | San Aid SI-60L solid content: 32% by mass | | - | 1.0% | 1.0% | 1.0% | - | - | - |
| | | San-Apro CP-210S | | - | - | - | - | 2.0% | - | - |
| | | Alumichelate A(W) | | 1.0% | 1.5% | 1.5% | 1.5% | - | 1.0% | 1.0% |
| | Surfactant (a3) | NOIGEN LP-100 | | 3.00% | 3.00% | 3.00% | 3.00% | 3.00% | 3.00% | 3.00% |
| | Inorganic particles (a2)/polyfunctional monomer (al) mass ratio | | | 1 | 1.5 | 1.5 | 1.2 | 1.2 | 1.2 | 1.2 |
| Storage layer (B-1) | Buffer layer forming composition | | | B6 | B7 | B8 | B9 | B10 | - | B12 |
| | Inorganic particles (b2) | Epoxy-modified silica sol solid content: 30% by mass | | - | - | - | 29.2% | 58.5% | - | 58.5% |
| | | Epoxy-unmodified silica sol solid content: 30% by mass | | 58.5% | 63.0% | 62.4% | 29.3% | - | - | - |
| | Polyfunctional monomer (b1) | DENACOL EX-841 epoxy equivalent: 372, molecular weight: 702 | | 9.8% | 8.8% | 8.7% | 9.8% | 9.8% | - | - |
| | | DENACOL EX-1610 epoxy equivalent: 170, molecular weight: 868 | | - | - | - | 13.6% | 13.6% | - | 10.5% |
| | | DENACOL EX-313 epoxy equivalent: 141, molecular weight: 204 | | 23.4% | 21.0% | 20.8% | 15.6% | 15.6% | - | 28.5% |
| | | ARON OXETANE OXT-221 | | 5.8% | 5.2% | 5.1% | - | - | - | - |
| | Solvent | Propylene glycol monoethyl ether | | 4.6% | 1.3% | 1.2% | 5.6% | 5.6% | - | 5.4% |
| | Polymerization initiator | San Aid SI-60L solid content: 32% by mass | | 1.0% | - | 1.0% | - | - | - | - |
| | | San-Apro CP-210S | | - | - | - | - | 2.0% | - | - |
| | | Alumichelate A(W) | | 1.0% | 1.5% | 1.5% | 2.0% | - | - | 2.0% |
| | Inorganic particles (b3) | NOIGEN LP-100 | | 0.50% | 0.50% | 0.50% | 0.50% | 0.50% | - | 0.50% |
| | Inorganic particles (b2)/polyfunctional monomer (b1) mass ratio | | | 1.5 | 1.8 | 1.8 | 1.5 | 1.5 | - | 1.5 |
| Evaluation results | | Initial | Breath antifogging property | A | A | A | A | A | B | B |
| | | | Contact angle (°) | 2.7 | 3.6 | 4.0 | 3.5 | 3.7 | 71.7 | 53.4 |
| | | | 50°C Steam antifogging property | > 10 min | > 10 min | > 10 min | > 10 min | > 10 min | 1 sec | 2 sec |
| | | After 1 h immersion in pure water | Breath antifogging property | A | A | A | A | A | B | B |
| | | | Contact angle (°) | 4.2 | 6.6 | 8.0 | 5.2 | 6.5 | 75.9 | 71.8 |
| | | | 50°C Steam antifogging | > 10 min | > 10 min | > 10 min | > 10 min | > 10 min | 1 sec | 1 sec |
| | | property | | | | | | | | |

The symbol "%" representing the amount of each component in each layer in Tables 1 and 2 means the content mass (% by mass) of the corresponding component with respect to the total mass of each layer.

The symbol "-" in Tables 1 and 2 means that the corresponding component is not contained.

In Tables 1 and 2, the "solid content" for the amount of the inorganic particles (a2) refers to a mass of components other than the contained solvent in a mass of a corresponding sol when the inorganic particles (a2) are used in the form of the corresponding sol.

In Tables 1 and 2, the "total dry mass" refers to a mass obtained by subtracting a sum of the total mass of the solvent indicated in the "solvent" section and the total mass of the solvent that can be contained in the components indicated in sections other than the "solvent" section from the total mass of the composition. For example, the silica sol contains a solvent.

Details of the terms indicated in Table 1 or Table 2 are as follows.
· Epoxy-modified silica sol (MEK-EC-2430Z manufactured by Nissan Chemical Corporation, solid content: 30%)
· Epoxy-unmodified silica sol (PGM-ST manufactured by Nissan Chemical Corporation, solid content: 30% by mass)
· DENACOL EX-841 (epoxy equivalent: 372, molecular weight: 702, manufactured by Nagase ChemteX Corporation, containing a compound represented by the following formula as a main component) 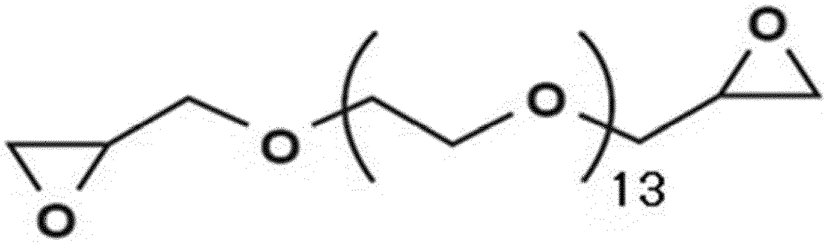
· DENACOL EX-1610 (epoxy equivalent: 170, molecular weight: 868, manufactured by Nagase ChemteX Corporation, containing a compound represented by the following formula as a main component) 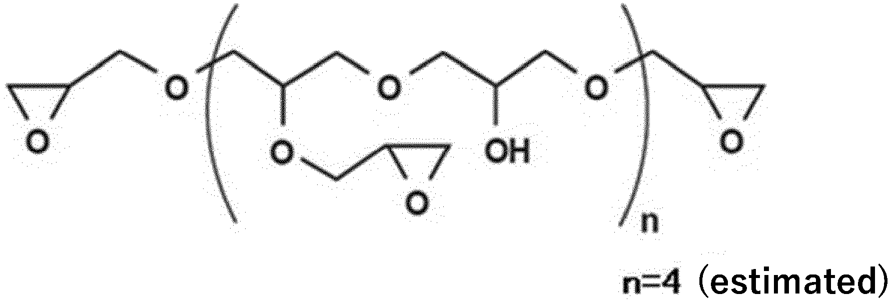
· DENACOL EX-313 (epoxy equivalent: 141, molecular weight: 204, manufactured by Nagase ChemteX Corporation, containing a compound represented by the following formula as a main component) 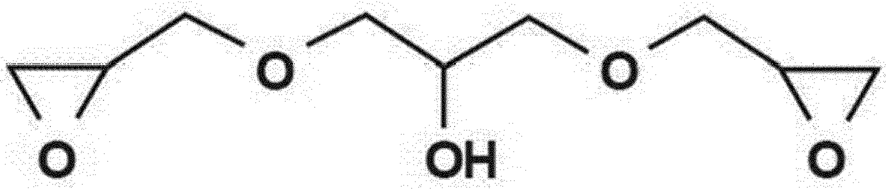
· ARON OXETANE OXT-221 (manufactured by TOAGOSEI CO., LTD.)
· San Aid SI-60L (thermal acid generator manufactured by Sanshin Chemical Industry Co., Ltd., containing a compound represented by the following formula as a main component, solid content: 32% by mass) 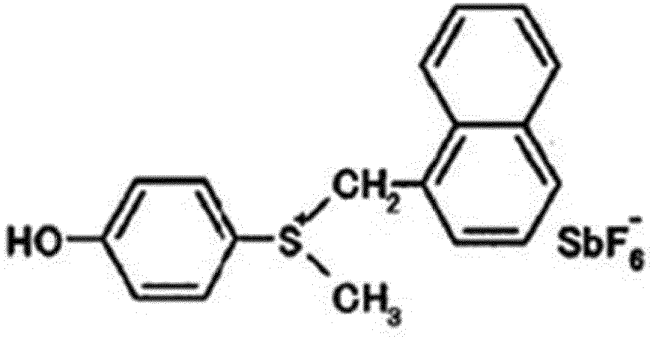
· Alumichelate A(W) (aluminum chelator containing a compound represented by the following formula as a main component, manufactured by Kawaken Fine Chemicals Co., Ltd., solid content: 100%) 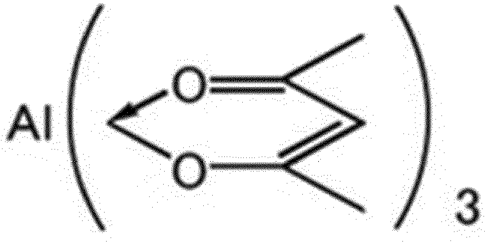
· NOIGEN LP-100 (polyoxyalkylene lauryl ether manufactured by DKS Co., Ltd.)

As shown in Tables 1 and 2, the laminated bodies according to the Examples in which the content mass of the inorganic particles (a2) with respect to the total mass of the storage layer (A) and the content mass of the inorganic particles (b2) with respect to the total mass of the buffer layer (B) were 30% by mass or more, the polyfunctional monomer (a1) contained the polyfunctional monomer (a1-1) having an epoxy equivalent of 200 g/mol or more, and the polyfunctional monomer (b1) contained the polyfunctional monomer (b1-1) having an epoxy equivalent of 200 g/mol or more exhibited a favorable mechanical strength because the content mass of the inorganic particles was 30% by mass or more. In addition, they were evaluated to be excellent in breath antifogging property, contact angle, and 50°C steam antifogging property.

On the other hand, the laminated body according to Comparative Example 1 with no buffer layer was inferior to those of the Examples in breath defogging property, contact angle, and 50°C steam antifogging property.

Comparative Example 2 in which the storage layer (A) did not contain the polyfunctional monomer (a1-1) having an epoxy equivalent of 200 g/mol or more and the buffer layer (B) did not contain the polyfunctional monomer (b 1-1) having an epoxy equivalent of 200 g/mol or more was inferior to the Examples in the breath defogging properties, the contact angle, and the 50°C steam antifogging property were inferior.

## Claims

1. A laminated body comprising: a substrate; a storage layer (A); and a buffer layer (B) disposed in this order, wherein:
the storage layer (A) is formed of a cured product of a composition (A-1) containing: a polyfunctional monomer (a1) containing two or more epoxy groups; inorganic particles (a2); and a surfactant (a3),
the buffer layer (B) is formed of a cured product of a composition (B-1) containing: a polyfunctional monomer (b1) containing two or more epoxy groups; and inorganic particles (b2),
a content mass of the inorganic particles (a2) with respect to a total mass of the storage layer (A) is 30% by mass or more,
a content mass of the inorganic particles (b2) with respect to a total mass of the buffer layer (B) is 30% by mass or more,
the content mass of the inorganic particles (b2) with respect to the total mass of the buffer layer (B) is larger than the content mass of the inorganic particles (a2) with respect to the total mass of the storage layer (A),
the polyfunctional monomer (a1) contains a polyfunctional monomer (a1-1) having a molecular weight per epoxy group in one molecule of 200 g/mol or more, and a polyfunctional monomer (a1-2) having a molecular weight per epoxy group in one molecule of less than 200 g/mol, and
the polyfunctional monomer (b1) contains a polyfunctional monomer (b1-1) having a molecular weight per epoxy group in one molecule of 200 g/mol or more, and a polyfunctional monomer (b1-2) having a molecular weight per epoxy group in one molecule of less than 200 g/mol,
each of the polyfunctional monomer (a1-1) and the polyfunctional monomer (b1-1) independently has an oxyalkylene structure,
each of the polyfunctional monomer (a1-2) and the polyfunctional monomer (b1-2) independently contains a compound represented by the following Formula (1): 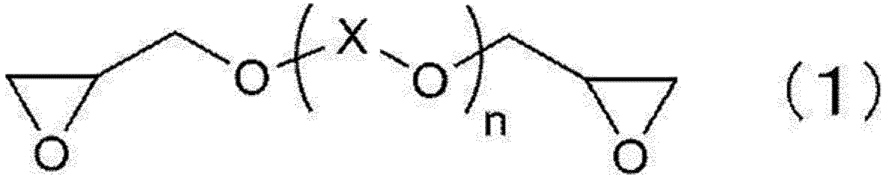
wherein, in Formula (1), X is an alkylene group having from 2 to 6 carbon atoms, and n is an integer from 1 to 5, and
wherein, in Formula (1), when n is an integer from 2 to 5, a plurality of Xs may be the same or different,
a content mass of the surfactant (a3) with respect to the total mass of the storage layer (A) is from 1.0% by mass to 5.0% by mass,
the buffer layer (B) contains no surfactant, or a content mass of a surfactant (b3) with respect to the total mass of the buffer layer (B) is from more than 0% by mass to less than 1.0% by mass, and
each of the surfactant (a3) and the surfactant (b3) independently has a polyoxyalkylene structure.

2. The laminated body according to claim 1, wherein each of the polyfunctional monomer (a1-1) and the polyfunctional monomer (b1-1) independently has a molecular weight per epoxy group in one molecule of 500 g/mol or less.

3. The laminated body according to claim 1 or 2, wherein:
the content mass of the inorganic particles (a2) with respect to the total mass of the storage layer (A) is from 30% by mass to 60% by mass, and
the content mass of the inorganic particles (b2) with respect to the total mass of the buffer layer (B) is from 40% by mass to 70% by mass.

4. The laminated body according to any one of claims 1 to 3, wherein:
the composition (A-1) further contains a polyfunctional monomer (a4) containing an oxetane ring, and
the composition (B-1) further contains a polyfunctional monomer (b4) containing an oxetane ring.

5. The laminated body according to any one of claims 1 to 4, wherein each of the composition (A-1) and the composition (B-1) independently contains silica particles and contains an aluminum chelator and a thermal acid generator as the thermal polymerization initiator.

6. The laminated body according to any one of claims 1 to 5, wherein a ratio of a thickness of the storage layer (A) to a thickness of the buffer layer (B) is in a range of from 1.3 to 15.

7. The laminated body according to any one of claims 1 to 6, wherein the substrate is a plastic lens.

8. The laminated body according to any one of claims 1 to 7, wherein:
a total content mass of the polyfunctional monomer (a1), the inorganic particles (a2), the surfactant (a3), and a polymerization initiator in the composition (A-1) is 95% by mass or more with respect to a total mass of the composition (A-1), and
a total content mass of the polyfunctional monomer (b1), the inorganic particles (b2), a surfactant (b3), and a polymerization initiator in the composition (B-1) is 95% by mass or more with respect to a total mass of the composition (B-1).

9. A method of manufacturing a laminated body according to any one of claims 1 to 8, comprising:
a step (S1) of providing an applied material layer (A2) of a composition (A-1a) containing a polyfunctional monomer (a1) containing two or more epoxy groups, inorganic particles (a2), a surfactant (a3), and a solvent (a4) on at least one surface of a substrate;
a step (S2) of removing the solvent (a4) from the applied material layer (A2);
a step (S3) of curing the applied material layer (A2) to obtain a storage layer (A);
a step (S4) of providing an applied material layer (B2) of a composition (B-1a) containing a polyfunctional monomer (b1) containing two or more epoxy groups, inorganic particles (b2), an optional surfactant (b3), and a solvent (b4) on the storage layer (A) after the step (S3);
a step (S5) of removing the solvent (b4) from the applied material layer (B2); and
a step (S6) of curing the applied material layer (B2) to obtain a buffer layer (B).

10. Use of a laminated body according to any one of claims 1 to 8, as an antifogging film.

## Patentansprüche

1. Laminierter Körper, der Folgendes umfasst: ein Substrat, eine Speicherschicht (A) und eine Pufferschicht (B), die in dieser Reihenfolge angeordnet sind, wobei:
die Speicherschicht (A) aus einem gehärteten Produkt einer Zusammensetzung (A-1) gebildet ist, die ein polyfunktionelles Monomer (a1), das zwei oder mehr Epoxygruppen enthält, anorganische Teilchen (a2) und ein Tensid (a3) enthält;
die Pufferschicht (B) aus einem gehärteten Produkt einer Zusammensetzung (B-1) gebildet ist, die ein polyfunktionelles Monomer (b1), das zwei oder mehr Epoxygruppen enthält, und anorganische Teilchen (b2) enthält;
der Massengehalt der anorganischen Teilchen (a2), bezogen auf die Gesamtmasse der Speicherschicht (A) 30 Massen-% oder mehr beträgt;
der Massengehalt der anorganischen Teilchen (b2), bezogen auf die Gesamtmasse der Pufferschicht (B) 30 Massen-% oder mehr beträgt;
der Massengehalt der anorganischen Teilchen (b2), bezogen auf die Gesamtmasse der Pufferschicht (B) größer ist als der Massengehalt der anorganischen Teilchen (a2), bezogen auf die Gesamtmasse der Speicherschicht (A);
das polyfunktionelle Monomer (a1) ein polyfunktionelles Monomer (a1-1), das ein Molekulargewicht pro Epoxygruppe im Molekül von 200 g/mol oder mehr aufweist, und ein polyfunktionelles Monomer (a1-2), das ein Molekulargewicht pro Epoxygruppe im Molekül von weniger als 200 g/Mol aufweist, enthält; und
das polyfunktionelle Monomer (b1) ein polyfunktionelles Monomer (b1-1), das ein Molekulargewicht pro Epoxygruppe im Molekül von 200 g/Mol oder mehr aufweist, und ein polyfunktionelles Monomer (b1-2), das ein Molekulargewicht pro Epoxygruppe im Molekül von weniger als 200 g/Mol aufweist, enthält;
das polyfunktionelle Monomer (a1-1) und das polyfunktionelle Monomer (b1-1) jeweils unabhängig voneinander eine Oxyalkylen-Struktur aufweisen;
das polyfunktionelle Monomer (a1-2) und das polyfunktionelle Monomer (b1-2) jeweils unabhängig voneinander eine Verbindung enthalten, die durch die folgende Formel (1) dargestellt ist: 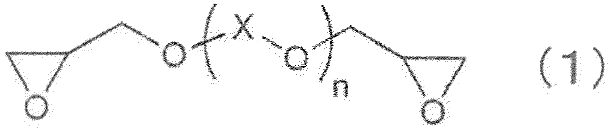
wobei in Formel (1) X eine Alkylengruppe mit 2 bis 6 Kohlenstoffatomen ist und n eine ganze Zahl von 1 bis 5 ist und
wobei in Formel (1), wenn n eine ganze Zahl von 2 bis 5 ist, eine mehrere X gleich oder unterschiedlich sein können;
der Massengehalt des Tensids (a3), bezogen auf die Gesamtmasse der Speicherschicht (A) 1,0 Massen-% bis 5,0 Massen-% beträgt;
die Pufferschicht (B) kein Tensid enthält oder der Massengehalt eines Tensids (b3), bezogen auf die Gesamtmasse der Pufferschicht (B) mehr als 0 Massen-% bis weniger als 1,0 Massen-% beträgt; und
das Tensid (a3) und das Tensid (b3) jeweils unabhängig voneinander eine Polyoxyalkylen-Struktur aufweisen.

2. Laminierter Körper nach Anspruch 1, wobei das polyfunktionelle Monomer (a1-1) und das polyfunktionelle Monomer (b1-1) jeweils unabhängig voneinander ein Molekulargewicht pro Epoxygruppe im Molekül von 500 g/Mol oder weniger aufweisen.

3. Laminierter Körper nach Anspruch 1 oder 2, wobei:
der Massengehalt der anorganischen Teilchen (a2), bezogen auf die Gesamtmasse der Speicherschicht (A) 30 Massen-% bis 60 Massen-% beträgt und
der Massengehalt der anorganischen Teilchen (b2), bezogen auf die Gesamtmasse der Pufferschicht (B) 40 Massen-% bis 70 Massen-% beträgt.

4. Laminierter Körper nach einem der Ansprüche 1 bis 3, wobei:
die Zusammensetzung (A-1) weiters ein polyfunktionelles Monomer (a4) umfasst, das einen Oxetan-Ring enthält und
die Zusammensetzung (B-1) weiters ein polyfunktionelles Monomer (b4) umfasst, das einen Oxetan-Ring enthält.

5. Laminierter Körper nach einem der Ansprüche 1 bis 4, wobei die Zusammensetzung (A-1) und die Zusammensetzung (B-1) jeweils unabhängig voneinander Siliciumdioxid-Teilchen enthält und einen Aluminium-Chelator und einen thermischen Säurebildner als thermischen Polymerisationsinitator enthält.

6. Laminierter Körper nach einem der Ansprüche 1 bis 5, wobei das Verhältnis zwischen der Dicke der Speicherschicht (A) und der Dicke der Pufferschicht (B) im Bereich von 1,3 bis 15 liegt.

7. Laminierter Körper nach einem der Ansprüche 1 bis 6, wobei das Substrat eine Kunststofflinse ist.

8. Laminierter Körper nach einem der Ansprüche 1 bis 7, wobei:
der gesamte Massengehalt des polyfunktionellen Monomers (a1), der anorganischen Teilchen (a2), des Tensids (a3) und des Polymerisationsinitiators in der Zusammensetzung (A-1) 95 Massen-% oder mehr, bezogen auf die Gesamtmasse der Zusammensetzung (A-1) beträgt und
der gesamte Massengehalt des polyfunktionellen Monomers (b1), der anorganischen Teilchen (b2), des Tensids (b3) und des Polymerisationsinitiators in der Zusammensetzung (B-1) 95 Massen-% oder mehr, bezogen auf die Gesamtmasse der Zusammensetzung (B-1) beträgt.

9. Verfahren zur Herstellung eines laminierten Körpers nach einem der Ansprüche 1 bis 8, das Folgendes umfasst:
einen Schritt (S1) des Bereitstellens einer Schicht (A2) aus einem aufgebrachten Material aus einer Zusammensetzung (A-1a), die ein polyfunktionelles Monomer (a1), das zwei oder mehr Epoxygruppen enthält, anorganische Teilchen (a2), ein Tensid (a3) und ein Lösungsmittel (a4) enthält, auf zumindest einer Oberfläche eines Substrats;
einen Schritt (S2) des Entfernens des Lösungsmittels (a4) aus der Schicht (A2) aus dem aufgebrachten Material;
einen Schritt (S3) des Härtens der Schicht (A2) aus dem aufgebrachten Material, um eine Speicherschicht (A) zu erhalten;
einen Schritt (S4) des Bereitstellens einer Schicht (B2) aus einem aufgebrachten Material aus einer Zusammensetzung (B-1a), die ein polyfunktionelles Monomer (b1), das zwei oder mehr Epoxygruppen enthält, anorganische Teilchen (b2), ein Tensid (b3) und ein Lösungsmittel (b4) enthält, auf der Speicherschicht (A) nach Schritt (S3);
einen Schritt (S5) des Entfernens des Lösungsmittels (b4) aus der Schicht (B2) aus dem aufgebrachten Material; und
einen Schritt (S6) des Härtens der Schicht (B2) aus dem aufgebrachten Material, um eine Pufferschicht (B) zu erhalten.

10. Verwendung eines laminierten Körpers nach einem der Ansprüche 1 bis 8 als Beschlagschutzfolie.

## Revendications

1. Corps stratifié comprenant : un substrat ; une couche de stockage (A) ; et une couche tampon (B) disposés dans cet ordre, dans lequel :
la couche de stockage (A) est formée d'un produit durci d'une composition (A-1) contenant : un monomère polyfonctionnel (a1) contenant deux groupes époxy ou plus ; des particules inorganiques (a2) ; et un tensioactif (a3),
la couche tampon (B) est formée d'un produit durci d'une composition (B-1) contenant : un monomère polyfonctionnel (b 1) contenant deux groupes époxy ou plus ; et des particules inorganiques (b2),
une teneur massique des particules inorganiques (a2) par rapport à la masse totale de la couche de stockage (A) est de 30 % en masse ou plus,
une teneur massique des particules inorganiques (b2) par rapport à la masse totale de la couche tampon (B) est de 30 % en masse ou plus,
la teneur massique des particules inorganiques (b2) par rapport à la masse totale de la couche tampon (B) est supérieure à la teneur massique des particules inorganiques (a2) par rapport à la masse totale de la couche de stockage (A),
le monomère polyfonctionnel (a1) contient un monomère polyfonctionnel (a1-1) présentant un poids moléculaire par groupe époxy dans une molécule de 200 g/mol ou plus, et un monomère polyfonctionnel (a1-2) présentant un poids moléculaire par groupe époxy dans une molécule de moins de 200 g/mol, et
le monomère polyfonctionnel (b1) contient un monomère polyfonctionnel (b1-1) présentant un poids moléculaire par groupe époxy dans une molécule de 200 g/mol ou plus, et un monomère polyfonctionnel (b1-2) présentant un poids moléculaire par groupe époxy dans une molécule de moins de 200 g/mol,
chacun du monomère polyfonctionnel (a1-1) et du monomère polyfonctionnel (b1-1) présente indépendamment une structure oxyalkylène,
chacun du monomère polyfonctionnel (a1-2) et du monomère polyfonctionnel (b1-2) contient indépendamment un composé représenté par la formule (1) suivante : 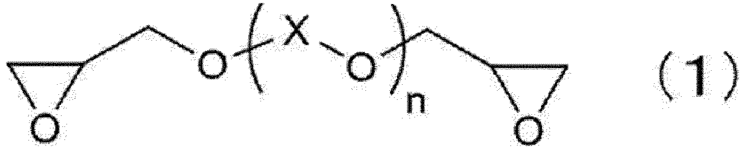
dans lequel, dans la formule (1), X est un groupe alkylène présentant de 2 à 6 atomes de carbone, et n est un nombre entier de 1 à 5, et
dans lequel, dans la formule (1), lorsque n est un entier de 2 à 5, une pluralité de X peuvent être identiques ou différents,
une teneur massique du tensioactif (a3) par rapport à la masse totale de la couche de stockage (A) est de 1,0 % en masse à 5,0 % en masse,
la couche tampon (B) ne contient pas de tensioactif, ou une teneur massique d'un tensioactif (b3) par rapport à la masse totale de la couche tampon (B) est comprise entre plus de 0 % en masse et moins de 1,0 % en masse, et
chacun du tensioactif (a3) et du tensioactif (b3) présente indépendamment une structure polyoxyalkylène.

2. Corps stratifié selon la revendication 1, dans lequel chacun du monomère polyfonctionnel (a1-1) et du monomère polyfonctionnel (b1-1) présente indépendamment un poids moléculaire par groupe époxy dans une molécule de 500 g/mol ou moins.

3. Corps stratifié selon la revendication 1 ou 2, dans lequel
la teneur massique des particules inorganiques (a2) par rapport à la masse totale de la couche de stockage (A) est de 30 % en masse à 60 % en masse, et
la teneur massique des particules inorganiques (b2) par rapport à la masse totale de la couche tampon (B) est de 40 % en masse à 70 % en masse.

4. Corps stratifié selon l'une quelconque des revendications 1 à 3, dans lequel
la composition (A-1) contient en outre un monomère polyfonctionnel (a4) contenant un cycle oxétane, et
la composition (B-1) contient en outre un monomère polyfonctionnel (b4) contenant un cycle oxétane.

5. Corps stratifié selon l'une quelconque des revendications 1 à 4, dans lequel chacune de la composition (A-1) et de la composition (B-1) contient indépendamment des particules de silice et contient un chélateur d'aluminium et un générateur d'acide thermique en tant qu'initiateur de polymérisation thermique.

6. Corps stratifié selon l'une quelconque des revendications 1 à 5, dans lequel un rapport d'une épaisseur de la couche de stockage (A) à une épaisseur de la couche tampon (B) est dans une plage de 1,3 à 15.

7. Corps stratifié selon l'une quelconque des revendications 1 à 6, dans lequel le substrat est une lentille en plastique.

8. Corps stratifié selon l'une quelconque des revendications 1 à 7, dans lequel
une teneur massique totale du monomère polyfonctionnel (a1), des particules inorganiques (a2), du tensioactif (a3) et d'un initiateur de polymérisation dans la composition (A-1) est de 95 % en masse ou plus par rapport à la masse totale de la composition (A-1), et
une teneur totale massique du monomère polyfonctionnel (b1), des particules inorganiques (b2), d'un tensioactif (b3) et d'un initiateur de polymérisation dans la composition (B-1) est de 95 % en masse ou plus par rapport à la masse totale de la composition (B-1).

9. Procédé de fabrication d'un corps stratifié selon l'une quelconque des revendications 1 à 8, le procédé comprenant les étapes consistant à :
une étape (S1) de fourniture d'une couche de matériau appliquée (A2) d'une composition (A-1a) contenant un monomère polyfonctionnel (a1) contenant deux groupes époxy ou plus, des particules inorganiques (a2), un tensioactif (a3) et un solvant (a4) sur au moins une surface d'un substrat ;
une étape (S2) d'élimination du solvant (a4) à partir de la couche de matériau appliquée (A2) ;
une étape (S3) de durcissement de la couche de matériau appliquée (A2) pour obtenir une couche de stockage (A) ;
une étape (S4) de fourniture d'une couche de matériau appliquée (B2) d'une composition (B-1a) contenant un monomère polyfonctionnel (b1) contenant deux groupes époxy ou plus, des particules inorganiques (b2), un tensioactif facultatif (b3) et un solvant (b4) sur la couche de stockage (A) après l'étape (S3) ;
une étape (S5) d'élimination du solvant (b4) à partir de la couche de matériau appliquée (B2) ; et
une étape (S6) de durcissement de la couche de matériau appliquée (B2) pour obtenir une couche tampon (B).

10. Utilisation d'un corps stratifié selon l'une quelconque des revendications 1 à 8 en tant que film antibuée.
